(19) Europäisches Patentamt
European Patent Office
Office européen des brevets

(11) **EP 3 940 231 B1**

(12) **EUROPÄISCHE PATENTSCHRIFT**

(45) Veröffentlichungstag und Bekanntmachung des Hinweises auf die Patenterteilung:
**17.04.2024 Patentblatt 2024/16**

(21) Anmeldenummer: **21185324.7**

(22) Anmeldetag: **13.07.2021**

(51) Internationale Patentklassifikation (IPC):
*F04B 49/06* $^{(2006.01)}$  *F25B 49/02* $^{(2006.01)}$
*F25B 31/00* $^{(2006.01)}$  *F04C 18/02* $^{(2006.01)}$
*F04C 28/28* $^{(2006.01)}$  *F04C 29/00* $^{(2006.01)}$
*F04B 39/06* $^{(2006.01)}$  *F04B 39/02* $^{(2006.01)}$
*F04B 51/00* $^{(2006.01)}$  *F04B 49/10* $^{(2006.01)}$

(52) Gemeinsame Patentklassifikation (CPC):
**F04B 49/065; F04B 39/023; F04B 39/062;
F04B 39/066; F04B 49/10; F04B 51/00;
F04C 28/28; F25B 49/022;** F04B 2201/0402;
F04B 2201/0801; F04B 2205/09; F04B 2205/11;
F04C 18/0215; F04C 2270/19; F04C 2270/80;

(Forts.)

(54) **KÄLTEMITTELVERDICHTER**

REFRIGERANT COMPRESSOR

COMPRESSEUR DE RÉFRIGÉRANT

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **15.07.2020 DE 102020118740**

(43) Veröffentlichungstag der Anmeldung:
**19.01.2022 Patentblatt 2022/03**

(73) Patentinhaber: **BITZER Kühlmaschinenbau GmbH
71065 Sindelfingen (DE)**

(72) Erfinder:
• **Mannewitz, Jens
04435 Schkeuditz (DE)**
• **Fuhrer, Tobias
72108 Rottenburg (DE)**
• **Schneider, Patrick
71083 Herrenberg (DE)**

(74) Vertreter: **Hoeger, Stellrecht & Partner
Patentanwälte mbB
Uhlandstrasse 14c
70182 Stuttgart (DE)**

(56) Entgegenhaltungen:
EP-A1- 2 853 742    WO-A1-2013/001829
DE-T5- 10 392 657    US-A1- 2016 298 627

(52) Gemeinsame Patentklassifikation (CPC): (Forts.)
F25B 2600/0253; F25B 2700/2105;
F25B 2700/2115; F25B 2700/21172;
F25B 2700/21173; Y02B 30/70

**Beschreibung**

Die Erfindung betrifft einen Kältemittelverdichter für Kälteanlagen, umfassend eine durch eine Antriebseinheit angetriebene Verdichtereinheit, wobei mindestens eine dieser Einheiten mit einer Steuereinheit versehen ist, welche durch eine Fördervolumensteuerung steuerbar ist, um den Kältemittelverdichter bei verschiedenen Fördervolumen zu steuern, wobei der Fördervolumensteuerung ein externer Fördervolumensollwert übermittelt wird.

Bei derartigen Kältemittelverdichtern besteht das Problem, im Teilleistungsbereich, insbesondere bei niedrigen Fördervolumen, eine Überhitzung des Kältemittelverdichters zu vermeiden, da bei niedrigen Fördervolumen die Kühlung durch das zu verdichtende Kältemittel zu gering ist. Aus der Patentschrift US-2016/0298627-A1 ist ein Kältemittelverdichter bekannt, der unter Berücksichtigung des Temperaturverhaltens des Verdichters geregelt wird.

Bei den Verdichtereinheiten kann es sich um Hubkolbenverdichter, um Schraubenverdichter oder auch um Scrollverdichter handeln.

Dieses Problem wird bei einem Kältemittelverdichter der eingangs beschriebenen Art erfindungsgemäß dadurch gelöst, dass die Fördervolumensteuerung mittels eines Sensors eine Verdichterreferenztemperatur der Verdichtereinheit erfasst, dass die Fördervolumensteuerung basierend auf der erfassten Verdichterreferenztemperatur und dem Fördervolumen eine Betriebszustandswertegruppe zur Erfassung eines Betriebszustands des Kältemittelverdichters ermittelt und unter Berücksichtigung von vorgegebenen Referenzwerten zur Unterscheidung von für den Kältemittelverdichter unkritischen und kritischen Betriebszuständen dann, wenn der auf der Verdichterreferenztemperatur basierende Wert der ermittelten Betriebszustandswertegruppe einen kritischen Betriebszustand des Kältemittelverdichters zulässt, ein Fördervolumen vorgibt, das einen Betrieb des Kältemittelverdichters außerhalb der kritischen Betriebszustände zur Folge hat.

Der Vorteil der erfindungsgemäßen Lösung ist darin zu sehen, dass somit die Möglichkeit besteht, den erfindungsgemäßen Kältemittelverdichter auch in Teilleistungszuständen, insbesondere bei niedrigen Fördervolumen, zu betreiben, ohne dass eine Überhitzung des Kältemittelverdichters zu befürchten ist, und somit eine Reduktion des Fördervolumens des Kältemittelverdichters ohne Schäden möglich ist, da die Fördervolumensteuerung bei Erreichen eines kritischen Betriebszustandes eingreift.

Im Zusammenhang mit der grundsätzlichen Definition der erfindungsgemäßen Lösung wurde nicht näher darauf eingegangen, wie die Fördervolumensteuerung das erfasste Fördervolumen beim Ermitteln der Betriebszustandswertegruppe bewertet und gegebenenfalls berücksichtigt.

So sieht eine vorteilhafte Lösung vor, dass die Fördervolumensteuerung beim Ermitteln der Werte der Betriebszustandswertegruppe des Kältemittelverdichters einen Mittelwert des Fördervolumens über einen definierten Erfassungszeitraum ermittelt.

Damit kann ausgeschlossen werden, dass kurzzeitige Schwankungen des Fördervolumens die Steuerung des Kältemittelverdichters beeinflussen. Darüber hinaus besteht auch die Möglichkeit, der Trägheit des Temperaturverhaltens des Kältemittelverdichters Rechnung zu tragen, da dieser in der Regel nicht plötzlich überhitzt, sondern sich eine Überhitzung des Kältemittelverdichters über einen längeren Zeitraum von beispielsweise mehreren oder vielen Minuten entwickelt.

Besonders günstig ist es, wenn der Erfassungszeitraum in dem Bereich von einer Minute bis 30 Minuten liegt, das heißt, dass der Erfassungszeitraum mindestens eine Minute, maximal 30 Minuten beträgt.

Ferner ist vorzugsweise vorgesehen, dass die Fördervolumensteuerung beim Ermitteln der Werte der Betriebszustandswertegruppe einen Mittelwert der Verdichterreferenztemperatur über einen definierten Erfassungszeitraum ermittelt, ebenfalls um kurzzeitige Schwankungen der Verdichterreferenztemperatur zu ignorieren.

Dieser definierte Erfassungszeitraum liegt vorzugsweise im Bereich von 30 Sekunden bis 15 Minuten.

Vorteilhafterweise ist der Erfassungszeitraum für den Mittelwert der Verdichterreferenztemperatur kürzer als Erfassungszeitraum für den Mittelwert des Fördervolumens.

Als Verdichterreferenztemperatur ist im Rahmen der erfindungsgemäßen Lösung beispielsweise die Erfassung einer Druckgastemperatur auf der Hochdruckseite der Verdichtereinheit und/oder einer Öltemperatur der Verdichtereinheit und/oder einer Temperatur der Antriebseinheit vorgesehen.

Hinsichtlich der Art der Ermittlung der Fördervolumen sind die unterschiedlichsten Möglichkeiten denkbar.

Eine vorteilhafte Lösung sieht vor, dass die Fördervolumensteuerung zur Ermittlung der Betriebszustandswertegruppe das Fördervolumen basierend auf Steuersignalen für mindestens eine der Einheiten erfasst.

Das heißt, dass die Steuerung somit in der Lage ist, aufgrund der von ihr selbst erzeugten Steuersignale und Abspeicherung derselben das Fördervolumen zum jeweiligen Zeitpunkt zu ermitteln.

Darüber hinaus wurde im Zusammenhang mit der bisherigen Beschreibung der erfindungsgemäßen Lösung nicht näher darauf eingegangen, wie das von der Fördervolumensteuerung vorzugebende Fördervolumen im Einzelnen ermittelt werden soll.

So sieht eine vorteilhafte Lösung vor, dass die Fördervolumensteuerung bei der Bestimmung des vorzugebenden Fördervolumens den auf dem erfassten Fördervolumen basierenden Wert der Betriebszustandswertegruppe in Relation zu den Referenzwerten berücksichtigt.

Dies ist so zu verstehen, dass die Fördervolumensteuerung diesen Wert der Betriebszustandswertegruppe direkt mit einem oder mehreren der Referenzwerte vergleicht und/oder in einen Berechnungsvorgang unter Heranziehung der Referenzwerte einbezieht.

Eine vereinfachte Lösung sieht vor, dass die Fördervolumensteuerung den auf dem erfassten Fördervolumen basierenden Wert der Betriebszustandswertegruppe mit den Referenzwerten vergleicht.

Der Vergleich mit den Referenzwerten kann einerseits dazu herangezogen werden, einen kritischen oder unkritischen Betriebszustand zu erkennen.

Andererseits kann der Vergleich mit den Referenzwerten auch dazu herangezogen werden, beispielsweise im Fall eines kritischen Betriebszustands den Referenzwert für das vorzugebende Fördervolumen heranzuziehen.

Eine vorteilhafte Lösung sieht beispielsweise vor, dass die Fördervolumensteuerung zur Ermittlung des vorzugebenden Fördervolumens mindestens einen durch die Referenzwerte vorgegebenen Wert für das Fördervolumen, der außerhalb der kritischen Betriebszustände liegt, heranzieht.

Alternativ oder ergänzend dazu sieht eine weitere vorteilhafte Lösung vor, dass die Fördervolumensteuerung das Fördervolumen derart vorgibt, dass eine Mittelung des Fördervolumens über einen Betriebsmittelungszeitraum ein Gesamtfördervolumen ergibt, das außerhalb der kritischen Betriebszustände liegt.

Hinsichtlich der Gestaltung und Ausbildung der Referenzwerte wurden bislang keine näheren Angaben gemacht.

So sieht eine Vorteilhafte Lösung vor, dass die Referenzwerte mindestens einen Grenzwert für das Fördervolumen umfassen, welcher eine Grenze zu den kritischen Betriebszuständen definiert.

Besonders günstig lassen sich die Referenzwerte dann berücksichtigen, wenn der Fördervolumensteuerung eine die Referenzwerte repräsentierende Grenzfunktion vorgegeben ist, welche die Grenze zwischen den unkritischen und kritischen Betriebszuständen definiert.

Eine besonders günstige Realisierung der erfindungsgemäßen Lösung sieht vor, dass die Fördervolumensteuerung das Fördervolumen so vorgibt, dass dieses mindestens dem das Fördervolumen repräsentierenden Wert der Grenzfunktion bei dem auf der Verdichterreferenztemperatur basierenden Wert der Betriebszustandswertegruppe entspricht.

In diesem Fall ist es beispielsweise denkbar, den das Fördervolumen repräsentierenden Wert der Grenzfunktion bei der entsprechenden Verdichterreferenztemperatur für die Vorgabe des Fördervolumens heranzuziehen, ohne beispielsweise einen Vergleich zwischen dem auf dem Fördervolumen basierenden Wert der Betriebszustandswertegruppe mit der Grenzfunktion durchzuführen.

Für die Bestimmung des vorzugebenden Fördervolumens hat es jedoch hinsichtlich einer von kurzfristigen Schwankungen möglichst freien Vorgabe des Fördervolumens Vorteile, wenn bei der Bestimmung des vorzugebenden Fördervolumens der jeweiligen Wert der Grenzfunktion bei dem auf der Verdichterreferenztemperatur basierenden Wert der Betriebszustandswertegruppe erst dann herangezogen wird, wenn der auf dem Fördervolumen basierende Wert der Betriebszustandswertegruppe im Bereich kritischer Betriebszustände, also beispielsweise unter dem jeweiligen Wert der Grenzfunktion, liegt.

Dadurch lässt sich erreichen, dass die Fördervolumen keine kritischen Betriebszustände erreicht.

Eine weitere vorteilhafte Lösung sieht vor, dass die Fördervolumensteuerung das Fördervolumen so vorgibt, dass eine Mittelung des Fördervolumens über einen Betriebsmittelungszeitraum mindestens den jeweiligen Wert der Grenzfunktion erreicht.

Hinsichtlich des Betriebsmittelungszeitraums wurden bislang keine näheren Angaben gemacht.

So ist vorzugsweise vorgesehen, dass der Betriebsmittelungszeitraum für die Mittelung des Fördervolumens den Erfassungszeitraum für den auf dem Fördervolumen basierenden Wert der Betriebszustandswertegruppe umfasst.

Prinzipiell wäre es denkbar, den Betriebsmittelungszeitraum so zu bemessen, dass dieser lediglich den Erfassungszeitraum für den Mittelwert des Fördervolumens umfasst.

Noch vorteilhafter ist es, wenn der Betriebsmittelungszeitraum größer ist als der Erfassungszeitraum für den auf dem Fördervolumen basierenden Wert der Betriebszustandswertegruppe.

Insbesondere ist es vorteilhaft, wenn der Betriebsmittelungszeitraum auch einen zukünftigen Zeitraum umfasst, um somit die Möglichkeit zu haben, vorauseilende, sich einstellende Werte des Fördervolumens bereits zu berücksichtigen und somit ein starkes Überschwingen bei der Festlegung der Fördervolumen zu vermeiden.

Hinsichtlich der bislang beschriebenen Ausführungsbeispiele wurde nicht näher definiert, wie die Vorgabe der Fördervolumen erfolgen soll.

So sieht eine vorteilhafte Lösung vor, dass die Fördervolumensteuerung zur Festlegung der Fördervolumen einen internen Fördervolumensollwert erzeugt und diesen für die Bestimmung der Fördervolumen berücksichtigt.

Im einfachsten Fall erfolgt die dadurch, dass die Fördervolumensteuerung als internen Fördervolumensollwert mindestens den dem auf der Verdichterreferenztemperatur basierenden Wert entsprechenden und durch die Grenzfunktion vorgegebenen Wert für das Fördervolumen heranzieht.

Das heißt, dass mindestens der dem jeweiligen Fördervolumen entsprechende Wert der Grenzfunktion bei der jeweiligen Verdichterreferenztemperatur als Fördervolumensollwert dient, der insbesondere für die Vorgabe des zukünftigen Fördervolumens berücksichtigt wird.

Insbesondere lassen sich zukünftige Fördervolumen dadurch berücksichtigen, dass die Fördervolumensteuerung den internen Fördervolumensollwert unter Berücksichtigung einer Mittelung über durch diesen internen Fördervolumensollwert entsprechende zukünftige Fördervolumen innerhalb des Betriebsmittelungszeitraums ermittelt.

Insbesondere ist dabei vorteilhafterweise vorgesehen, dass der interne Fördervolumensollwert so bestimmt wird, dass die diesem entsprechenden zukünftigen Fördervolumen in Verbindung mit dem auf dem Fördervolumen basierenden Wert der Betriebszustandswertegruppe ein mittleres Gesamtfördervolumen ergibt, das dem von der Grenzfunktion bei dem auf der Verdichterreferenztemperatur basierenden Wert der Betriebszustandswertegruppe vorgegebenen Grenzwert für das Gesamtfördervolumen entspricht.

Dabei können bei dem internen Fördervolumensollwert die zukünftigen Fördervolumen als momentaner Wert berücksichtigt werden.

Besonders günstig ist es, wenn die dem internen Fördervolumensollwert entsprechenden zukünftigen Fördervolumen über einen zukünftigen Erfassungszeitraum gemittelt werden.

Somit erfolgt einerseits bei der Bestimmung des internen Fördervolumensollwerts eine Mitteilung über die Fördervolumen in der Vergangenheit und außerdem eine Mittelung über die dem zu ermittelnden Fördervolumensollwert entsprechenden zukünftigen Fördervolumen, um somit unter Berücksichtigung der Fördervolumen in der Vergangenheit und der dem internen Fördervolumensollwert entsprechenden Fördervolumen in der Zukunft einen Mittelwert über den Betriebsmittelungszeitraum zu bilden, der somit die Fördervolumen aus der Vergangenheit als auch die zukünftigen Fördervolumen berücksichtigt, so dass dadurch insbesondere starke Schwankungen der vorzugebenden Fördervolumen vermieden werden.

Besonders günstig ist es, wenn der Betriebsmittelungszeitraum sich aus dem vergangenen Erfassungszeitraum für das mittlere Fördervolumen und dem zukünftigen Erfassungszeitraum für die Mittelung über die zukünftigen Fördervolumen zusammensetzt.

Im Zusammenhang mit der bisherigen Erläuterung der Erfindung wurde nicht näher darauf eingegangen, in welchem Maße die Fördervolumensteuerung bei der Steuerung des Fördervolumens den intern ermittelten Fördervolumensollwert oder den extern vorgegebenen Fördervolumensollwert berücksichtigt.

So sieht eine vorteilhafte Lösung vor, dass die Fördervolumensteuerung zur Steuerung des Fördervolumens den intern ermittelten Fördervolumensollwert so lange berücksichtigt, so lange der extern vorgegebene Fördervolumensollwert unter dem intern ermittelten Fördervolumensollwert liegt, so dass der intern ermittelte Fördervolumensollwert stets eine Minimalbedingung für das vorzugebende Fördervolumen darstellt, und somit der extern vorgegebene Fördervolumensollwert nur dann berücksichtigt wird, wenn er höher liegt als der interne Fördervolumensollwert.

Im einfachsten Fall lässt sich dies dadurch erreichen, dass die Fördervolumensteuerung den intern ermittelten Fördervolumensollwert und den extern vorgegebenen Fördervolumensollwert miteinander vergleicht und den größeren der Fördervolumensollwerte zur Steuerung des Fördervolumens berücksichtigt.

Um dem Anlagenbetreiber und/oder der Anlagensteuerung zu vermitteln, ob das Fördervolumen durch den internen oder den externen Fördervolumensollwert bestimmt wird, ist vorzugsweise vorgesehen, dass die Fördervolumensteuerung dann ein Signal generiert, wenn der Kältemittelverdichter mit einem intern ermittelten Fördervolumensollwert betrieben wird.

Vorteilhafterweise ist ebenfalls vorgesehen, dass die Fördervolumensteuerung dann ein Informationssignal generiert, wenn das Fördervolumen durch den externen Fördervolumensollwert bestimmt wird.

Eine weitere vorteilhafte Lösung sieht vor, dass der Fördervolumensteuerung ein Vorwarnbereich vorgegeben ist, in welchem unkritische Betriebszustände liegen, die an die vorgegebene Grenzfunktion angrenzen.

Dadurch besteht die Möglichkeit, einen Anlagenbetreiber oder die übergeordnete Anlagensteuerung darauf hinzuweisen, dass eine Wahrscheinlichkeit besteht, die unkritischen Betriebszustände zu verlassen, so dass die Fördervolumensteuerung gegebenenfalls in der vorstehend beschriebenen Art und Weise eingreifen wird.

Besonders günstig ist es dabei, wenn die Fördervolumensteuerung ein Vorwarnsignal dann generiert, wenn Betriebszustandswertegruppen erkannt werden, die im Vorwarnbereich liegen.

Eine weitere vorteilhafte Ausführungsform sieht vor, dass die Fördervolumensteuerung ergänzend oder alternativ zur Steuerung des Fördervolumens einen Lüfter und/oder eine Kältemitteleinspritzung zur Kühlung des Kältemittelverdichters ansteuert.

Insbesondere kann dabei die Ansteuerung des Lüfters oder der Kältemitteleinspritzung durch das einen Vorwarnbereich anzeigende Vorwarnsignal erfolgen.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:

Fig. 1       eine schematische Darstellung einer erfindungsgemäßen Kälteanlage;

Fig. 2       einen Querschnitt längs Linie 2-2 durch einen Kältemittelverdichter der erfindungsgemäßen Kälteanlage;

Fig. 3       einen Schnitt durch eine mechanische Fördervolumen-Steuerungseinheit integriert in einen Zylinderkopf in der geöffneten Stellung eines Ventilkörpers der mechanischen Fördervolumen-Steuerungseinheit;

Fig. 4       einen Schnitt ähnlich Fig. 3 in einer geschlossenen Stellung des Ventilkörpers der mechanischen Fördervolumen-Steuerungseinheit;

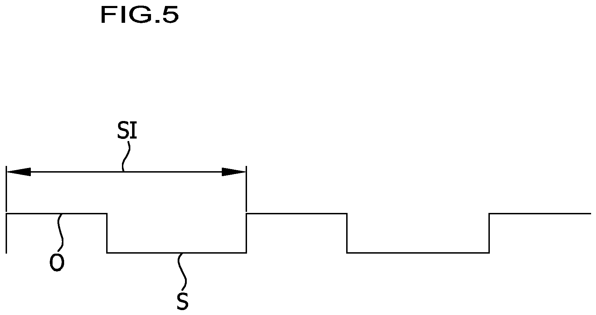

Fig. 5       eine schematische Darstellung eines Schaltintervalls umfassend ein Öffnungsintervall und ein Schließintervall;

Fig. 6       eine schematische Darstellung eines Einsatzdiagramms;

Fig. 7       ein Ablaufschema eines ersten Ausführungsbeispiels zur Darstellung der erfindungsgemäßen Vorgehensweise;

Fig. 8       eine Darstellung von durch eine Grenzfunktion vorgegebenen Referenzwerten beim ersten Ausführungsbeispiel zur Unterscheidung von unkritischen und kritischen Betriebszuständen;

Fig. 9       ein Ablaufschema ähnlich Fig. 7 eines zweiten Ausführungsbeispiels;

Fig. 10      eine Darstellung ähnlich Fig. 8 von durch eine Grenzfunktion vorgegebenen Referenzwerten bei dem zweiten Ausführungsbeispiel

Fig. 11      ein Ablaufschema ähnlich Fig. 9 eines dritten Ausführungsbeispiels;

Fig. 12      ein ausschnittsweise dargestelltes Ablaufschema eines vierten Ausführungsbeispiels;

Fig. 13      eine schematische Darstellung der Kälteanlage ähnlich Fig. 1 umfassend die Variante gemäß dem vierten und fünften Ausführungsbeispiel und

Fig. 14      ein ausschnittsweise dargestelltes Ablaufschema gemäß einem fünften Ausführungsbeispiel.

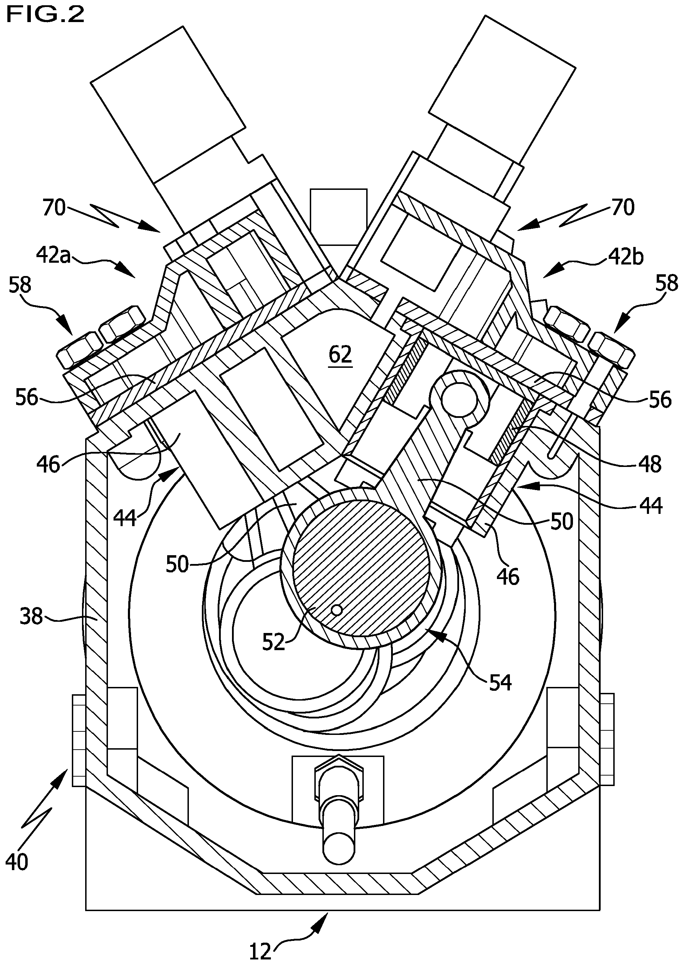

Ein Ausführungsbeispiel einer erfindungsgemäßen Kälteanlage, umfasst einen Kältemittelverdichter 10, von dessen Hochdruckanschluss 14 eine Leitung 16 zu einem als Ganzes mit 18 bezeichneten hochdruckseitigen Wärmeübertrager führt, in welchem das verdichtete Kältemittel durch Abfuhr von Wärme zu einer Wärmesenke, beispielsweise umgewälzte Umgebungsluft oder andere kühlende Medien, kondensiert.
Von dem hochdruckseitigen Wärmeübertrager 18 strömt flüssiges Kältemittel in einer Leitung 20 zu einem Sammler 22, in welchem sich das flüssige Kältemittel sammelt und von welchem ausgehend dieses dann über eine Leitung 28 zu einem Expansionsorgan 30 für einen niederdruckseitigen Wärmeübertrager 32 strömt und Wärme, beispielsweise aus einem diesen durchströmenden gasförmigen Medium, aufnimmt.
Nach Durchströmen des niederdruckseitigen Wärmeübertragers 32 strömt das verdampfte Kältemittel über eine Leitung 34 zu einem Niederdruckanschluss 36 des Kältemittelverdichters 10.
Wie in Fig. 2 dargestellt, weist der erfindungsgemäße Kältemittelverdichter 10 beispielsweise als Verdichtereinheit 40 einen Hubkolbenverdichter auf, der ein Verdichtergehäuse 38 umfasst, in welchem beispielsweise zwei V-förmig zueinander angeordnete, parallel arbeitende Zylinderbänke 42a und 42b vorgesehen sind, von denen jede mindestens eine, insbesondere zwei oder mehr Zylindereinheiten 44 umfasst.
Jede dieser Zylindereinheiten 44 ist gebildet aus einem Zylindergehäuse 46, in welchem ein Kolben 48 dadurch oszillierend bewegbar ist, dass der Kolben 48 durch ein Pleuel 50 antreibbar ist, das seinerseits auf einem Exzenter 52 einer Exzenterwelle 54 sitzt oder von einer Kurbelwelle angetrieben ist, die beispielsweise bei dem erfindungsgemäßen Kältemittelverdichter 12 durch eine als Elektromotor ausgebildete Antriebseinheit 60 angetrieben ist, wobei der Elektromotor als ein Synchron- oder Asynchronmotor ausgebildet sein kann.
Das Zylindergehäuse 46 jeder der Zylindereinheiten 44 wird durch eine Ventilplatte 56 abgeschlossen, auf welcher ein Zylinderkopf 58 angeordnet ist.
Vorzugsweise überdeckt dabei die Ventilplatte 56 nicht nur ein Zylindergehäuse 46 einer Zylindereinheit 44, sondern sämtliche Zylindergehäuse 46 der jeweiligen Zylinderbank 42, und in gleicher Weise übergreift der Zylinderkopf 58 ebenfalls sämtliche Zylindergehäuse 46 der jeweiligen Zylinderbank 42.

Das Verdichtergehäuse 38 umfasst ferner noch einen mit dem Niederdruckanschluss 36 in Verbindung stehenden Einlasskanal 62, welcher beispielsweise in dem Verdichtergehäuse 40 integriert ist.

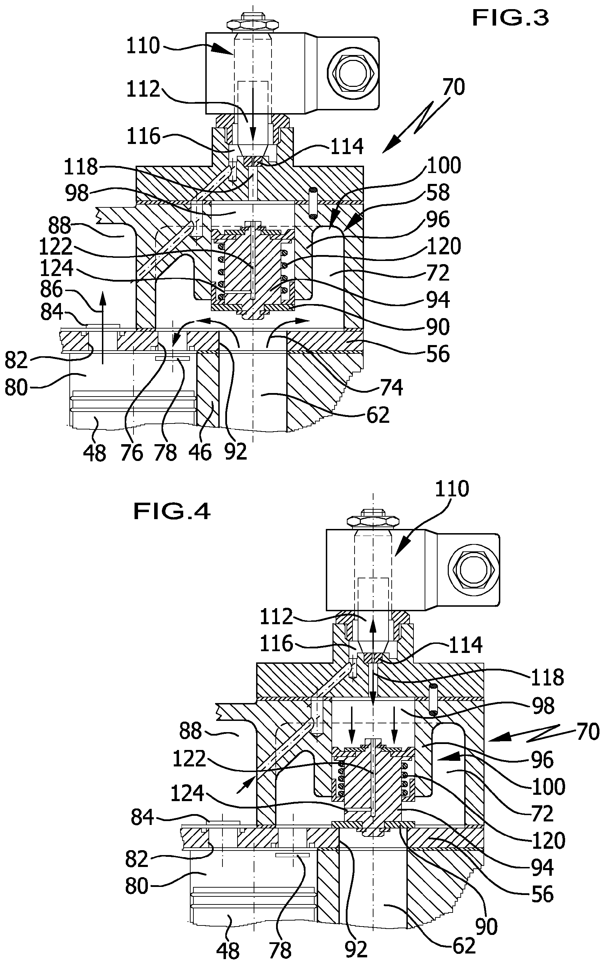

Wie in Fig. 3 vergrößert dargestellt, ist mindestens einer Zylinderbank 42, in der Zeichnung jeder Zylinderbank 42, eine als Ganzes mit 70 bezeichnete mechanische Steuerungseinheit zugeordnet, welches dazu dient, einen von dem Einlasskanal 62 in den jeweiligen Zylinderkopf 58, und zwar in eine Einlasskammer 72 desselben, durch die Ventilplatte 56 hindurchtretenden Einlassstrom 74 von Kältemittel zuzulassen, um somit die jeweilige Zylinderbank 42 zu aktivieren, oder zu unterbrechen, um somit die jeweilige Zylinderbank 42 zu deaktivieren und das vorzugebende Fördervolumen FV zu steuern.

Ist die mechanische Steuerungseinheit 70 geöffnet - wie in Fig. 3 dargestellt - so hat der Einlassstrom 74 die Möglichkeit, über eine in der Ventilplatte 56 vorgesehene Einlassöffnung 76 und ein an der Ventilplatte 56 vorgesehenes Einlassventil 78 in eine von dem jeweiligen Kolben 48 und dem jeweiligen Zylindergehäuse 46 sowie der Ventilplatte 56 begrenzte Zylinderkammer 80 einzutreten, um in dieser durch die oszillierende Bewegung des Kolbens 48 verdichtet zu werden, so dass über eine Auslassöffnung 82 und ein Auslassventil 84 ein Auslassstrom 86 aus der Zylinderkammer 80 austritt und in eine Auslasskammer 88 des Zylinderkopfes 58 eintritt.

Die mechanische Steuerungseinheit 70 ist beispielsweise als Servoventil ausgebildet, welches in dem Zylinderkopf 58 integriert ist und einen Ventilkörper 90 aufweist, mit welchem eine in der Ventilplatte 56 vorgesehene Einströmöffnung 92 der Einlasskammer 72 verschließbar ist.

Der Ventilkörper 90 ist ferner an einem Schaltkolben 94 angeordnet, welcher in einem Schaltzylindergehäuse 96 geführt ist, so dass der Schaltkolben 94 durch einen in einer Schaltzylinderkammer 98 vorliegenden Druck in Richtung der Ventilplatte 56 bewegbar ist, um die Einströmöffnung 92 in derselben zu verschließen.

Eine aus dem Schaltzylindergehäuse 96, dem Schaltkolben 94 und der Schaltzylinderkammer 98 gebildete Schaltzylindereinheit 100, die in den Zylinderkopf 58 integriert ist, ist dabei über ein Steuerventil 110 steuerbar, welches einen elektromagnetisch bewegbaren Steuerkolben 112 umfasst, mit welchem ein Steuerventilsitz 114 verschließbar ist, wobei der Steuerkolben 112 und der Steuerventilsitz 114 dazu vorgesehen sind, eine Verbindung zwischen einem zur Auslasskammer 88 führenden Hohldruckkanal 116 und einem zu der Schaltzylinderkammer 98 führenden Druckzufuhrkanal 118 für den Schaltzylinder 100 zu unterbrechen oder freizugeben.

Wird die Verbindung zwischen dem Hochdruckkanal 116 und dem Druckzufuhrkanal 118 freigegeben, so steht die Schaltzylinderkammer 98 unter dem in der Auslasskammer 88 herrschenden Hochdruck und folglich bewegt sich der Schaltkolben 94 in Richtung der Ventilplatte 56 und presst den Ventilkörper 90 gegen diese, um die Einströmöffnung 92 in der Ventilplatte 56 zu verschließen (Fig. 4).

Dabei wirkt der auf den Schaltkolben 94 durch den Hochdruck in der Schaltzylinderkammer 98 wirkenden Kraft die Kraft eines elastischen Kraftspeichers 120 entgegen, welcher an dem Schaltzylindergehäuse 96 einerseits abgestützt ist und andererseits auf den Schaltkolben 94 derart wirkt, dass dieser sich von der Ventilplatte 56 wegbewegt und somit den Ventilkörper 90 in eine die Einströmöffnung 92 freigebende Stellung bewegt.

Insbesondere ist der Schaltkolben 94 mit einem Druckentlastungskanal 122 versehen, welcher von einer der Schaltzylinderkammer 98 zugewandten Öffnung zu einer, in Fig. 4 dargestellten Auslassöffnung 124 führt, die in der die Einströmöffnung 92 verschließenden Stellung des Ventilkörpers 90 und des Schaltkolbens 94 in die Einlasskammer 72 mündet. Der Druckentlastungskanal 124 bewirkt dabei, dass bei einer Unterbrechung der Verbindung zwischen dem Hochdruckkanal 116 und dem Druckzufuhrkanal 118 der Druck in der Schaltzylinderkammer 98 schnell zusammenbricht und sich somit der Schaltkolben 94 unter Wirkung des elastischen Kraftspeichers 120 mitsamt dem Ventilkörper 90 in eine die Einströmöffnung 92 freigebende, in Fig. 3 dargestellte Stellung bewegen.

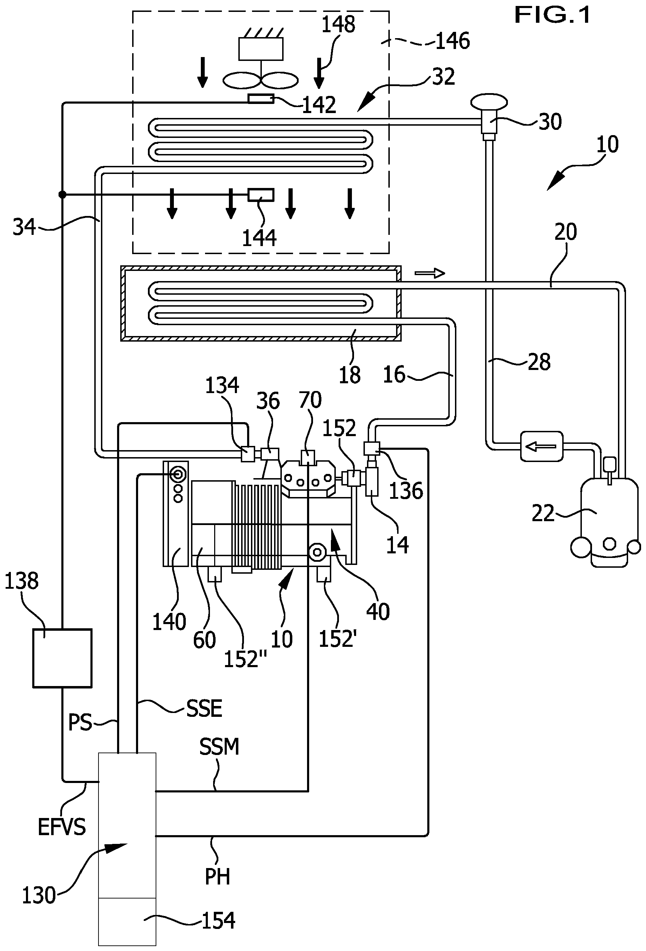

Die mechanische Steuerungseinheit 70 ist durch eine in Fig. 1 dargestellte Fördervolumensteuerung 130 mittels Steuersignalen SSM ansteuerbar, wodurch die mechanische Steuerungseinheit 70 geschlossen oder geöffnet werden kann, um die jeweilige Zylinderbank 42a, 42b zu aktivieren oder zu deaktivieren und somit den Kältemittelverdichter 12 in einen den Umfang der Aktivierung und Deaktivierung der Zylinderbänke 42 definierenden Betriebsmodus zu betreiben.

Außerdem ist durch die Fördervolumensteuerung 130 auch der Antriebsmotor 60 durch eine Steuerungseinheit 140 mittels Steuersignalen SSE steuerbar, die insbesondere als Frequenzumrichter für den Elektromotor 60 ausgebildet ist, um diesen drehzahlvariabel betreiben zu können und dadurch ebenfalls alternativ oder ergänzend zu den mechanischen Steuerungseinheiten 70 das vorzugebende Fördervolumen FV steuern zu können.

Darüber hinaus hat die Fördervolumensteuerung 130 die Möglichkeit das jeweilige Fördervolumen FV des Kältemittelverdichters 10, beispielsweise durch die Steuersignale SSM, zu erfassen.

Ferner lässt sich das vorzugebende Fördervolumen FV, insoweit, als dies durch den Frequenzumrichter 140 beeinflusst ist, durch die vom Elektromotor 60 aufgenommene elektrische Leistung oder die Steuersignale SSE erfassen.

Außerdem wird der Fördervolumensteuerung 130 noch ein externer Fördervolumensollwert EFVS vorgegeben, welcher von einer Anlagensteuerung 138 generiert wird, die die am niederdruckseitigen Wärmeübertrager 32 angeforderte Kälteleistung zur Kühlung eines Objekts 146, beispielsweise einer Kühlkammer, erfasst, beispielsweise durch dem niederdruckseitigen Wärmeübertrager 32 zugeordnete Temperatursensoren 142 und 144, die es erlauben, die Temperaturen eines den niederdruckseitigen Wärmeübertrager 32 und das Objekt 146 durchströmenden Mediums 148, beispielsweise vor und nach dem niederdruckseitigen Wärmeübertrager 32, zu erfassen, und mit einer geforderten Temperatur des Mediums 146 zu vergleichen.

Die Fördervolumensteuerung 130 passt in einer Steuerstufe durch die Erzeugung geeigneter Steuersingale SSM und SSE, die Kälteleistung der Kälteanlage 10 an die für die Kühlung des Objekts 146 erforderliche Kälteleistung durch Wahl eines geeigneten Betriebs der Verdichtereinheit 10 mittels der Steuerungseinheit 70 und/oder durch eine mögliche Regelung der Drehzahl des Elektromotors 60 mittels des Frequenzumrichters 140 an, wobei als Basis für diese Anpassung der von der Anlagensteuerung 138 erzeugte externe Fördervolumensollwert EFVS herangezogen wird.

Insbesondere steht für die Anpassung der Drehzahl allerdings nur ein durch die Bauweise des Elektromotors 60 begrenzter Drehzahlbereich zur Verfügung, der bei der Auswahl des geeigneten Betriebs ebenfalls zu berücksichtigen ist.

Der in Teilleistungszuständen mögliche Betrieb kann beispielsweise

- einen Betrieb des Kältemittelverdichters 10 mit allen Zylinderbänken 42 im aktivierten Zustand mit oder ohne einer Anpassung an den Teilleistungszustand durch Anpassung der Drehzahl des Elektromotors 12 durch den Frequenzumrichter 132,

- einen Betrieb des Kältemittelverdichters 10 mit aktiven und inaktiven Zylinderbänken 42 mit oder ohne Anpassung der Drehzahl des Elektromotors 12 durch den Frequenzumrichter 132 an den Umfang der aktiven und inaktiven Zylinderbänke,

- einen Betrieb des Kältemittelverdichters 10 mit nur einer aktiven Zylinderbank 42 und einer Anpassung an den Teilleistungszustand durch Anpassung der Drehzahl des Elektromotors 12 durch den Frequenzumrichter

vorsehen.

Das Aktivieren oder Deaktivieren von mindestens einer der Zylinderbänke 42a, 42b, kann beispielsweise bei einer ersten Art des Betriebs über den gesamten Zeitraum des jeweiligen Teilleistungszustands erfolgen, so dass zum Beispiel während eines bestimmten Zeitraums, in dem ein Teilleistungszustand von X % des Volllastzustands gefordert ist, eine Zylinderbank 42 dauerhaft deaktiviert ist und der Kältemittelverdichter 12 mit der jeweils anderen aktiven Zylinderbank 42 arbeitet, und gegebenenfalls außerdem eine entsprechende Anpassung der Drehzahl des Elektromotors durch entsprechende Ansteuerung des Frequenzumrichters 132 erfolgt.

Alternativ dazu ist es aber auch bei einer zweiten Art des Betriebs möglich, während des Zeitraums eines Teilleistungszustands mindestens eine Zylinderbank 42a, 42b oder beide Zylinderbänke 42 getaktet zu aktivieren oder deaktivieren und/oder gegebenenfalls außerdem die Drehzahl des Elektromotors 60 durch Ansteuerung des Frequenzumrichters 132 in geeigneter Weise anzupassen.

Die mechanische Steuerungseinheit 70 ist hierzu durch die in Fig. 1 dargestellte Fördervolumensteuerung 130 derart ansteuerbar, dass durch diese in kontinuierlich aufeinanderfolgenden Schaltintervallen SI die mechanische Steuerungseinheit 70 schließt und öffnet, wobei jedes der Schaltintervalle SI ein Öffnungsintervall O aufweist, in welchem der Ventilkörper 90 in seiner freigebenden Stellung ein Hindurchtreten des Einlassstroms 74 durch die Einströmöffnung 92 zulässt und die entsprechende Zylinderbank 42 aktiviert, sowie ein Schließintervall S, in welchem der Ventilkörper 90, wie in Fig. 4 dargestellt, in seiner verschließenden Stellung das Durchströmen des Einlassstroms 74 durch die Einströmöffnung 92 blockiert und somit die entsprechende Zylinderbank 42 deaktiviert.

Innerhalb der Dauer des jeweiligen Schaltintervalls SI kann nun die Zeitdauer des Öffnungsintervalls O und des Schließintervalls S relativ zueinander variabel eingestellt werden, so dass entweder das Öffnungsintervall O größer ist als das Schließintervall oder umgekehrt.

Im Extremfall kann das Öffnungsintervall O im Wesentlichen sich über die gesamte Dauer des Schaltintervalls SI erstrecken, während das Schließintervall S beliebig klein wird, oder es kann umgekehrt auch sich das Schließintervall S im Wesentlichen über die gesamte Dauer des Schaltintervalls SI erstrecken, so dass das Öffnungsintervall O beliebig klein wird.

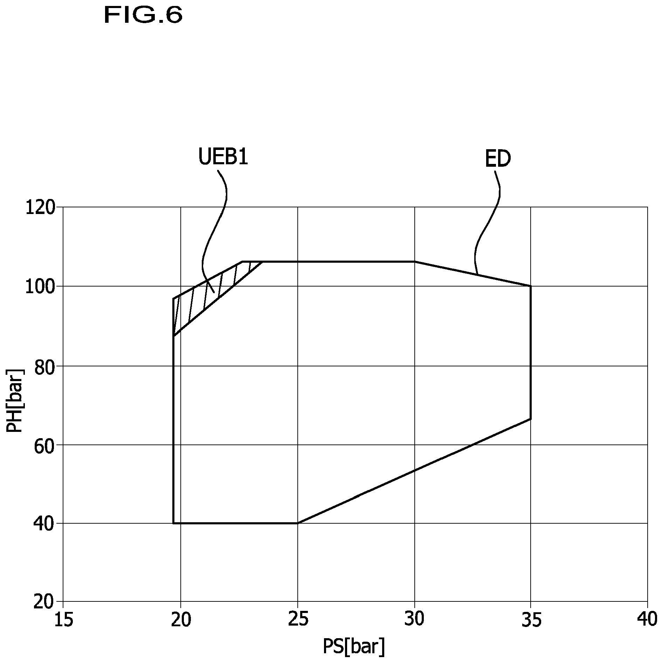

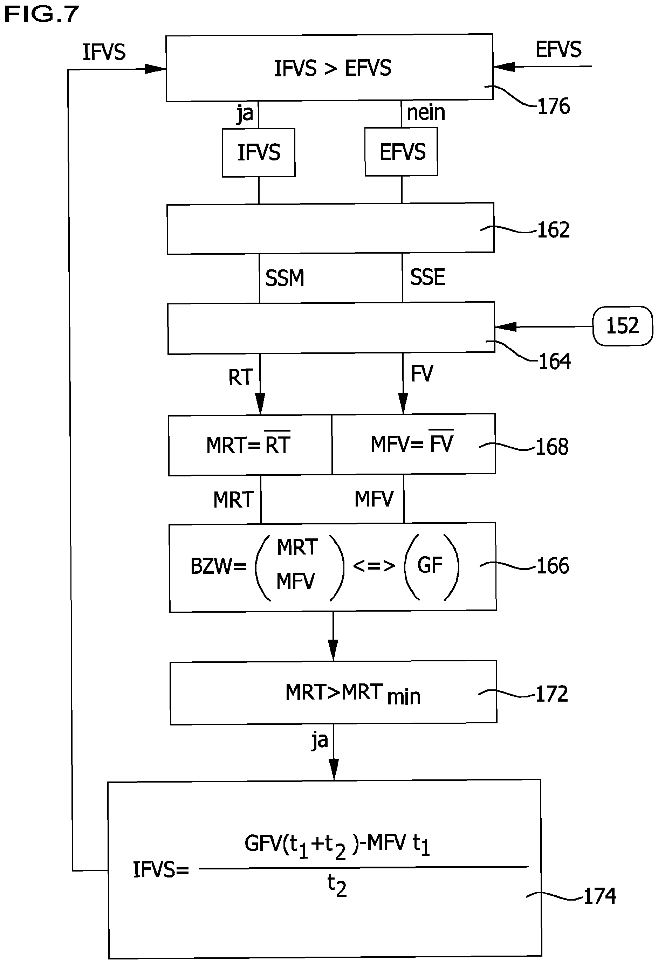

Die erfindungsgemäße Fördervolumensteuerung 130 betreibt den Kältemittelverdichter 10 grundsätzlich innerhalb des Einsatzdiagramms ED, dargestellt in Fig. 6, das ein Beispiel eines Einsatzdiagramms ED für einen Verdichter darstellt und das die Relation der für einen speziellen Kältemittelverdichter 10 zulässigen Werte des Saugdrucks PS und des Hochdrucks PH angibt, wobei in der in Fig. 7 mit 162 bezeichneten Steuerstufe die Steuersignale SSM und/oder SSE basierend auf einem von zwei Fördervolumensollwerten, nämlich dem externen Fördervolumensollwert EFVS und einen nachfolgend noch näher zu erläuternden internen Fördervolumensollwert IFVS erzeugt werden.

Das Einsatzdiagramm ED berücksichtigt jedoch nicht, dass insbesondere bei reduziertem Fördervolumen FV im Einsatzdiagramm ED eine Überhitzung beispielsweise in den Bereichen UEB1 des Einsatzdiagramms ED, in Fig. 6 schraffiert, eintreten kann, da bei reduziertem Fördervolumen FV über längere Zeit aufgrund des reduzierten Durchflusses des zu verdichtenden Mediums, das auch eine Kühlfunktion hat, eine unzulässige Erhitzung in der Verdichtereinheit 40 auftritt, so dass eine Überhitzung nicht nur der Verdichtereinheit 40 sondern auch des gesamten Kältemittelverdichters 10 auftreten kann, die zu Beschädigungen führt, obwohl der Kältemittelverdichter 10 innerhalb der vom Einsatzdiagramm ED vorgegebenen Grenzen betrieben wird.

Aus diesem Grund erfolgt bei der erfindungsgemäßen Lösung durch die Fördervolumensteuerung 130 eine Erfassung einer Verdichterreferenztemperatur RT mittels eines Sensors 152, insbesondere eines Temperatursensors, der beispielsweise im Bereich des Hochdruckanschlusses 14 angeordnet ist.

Als Verdichterreferenztemperatur RT kann aber auch alternativ oder ergänzend eine Öltemperatur der Verdichtereinheit (40), erfasst über einen Sensor 152', und/oder eine Temperatur der Antriebseinheit, erfasst über einen Sensor 152", herangezogen werden.

Ferner erfasst die Fördervolumensteuerung 130 in einer Erfassungsstufe 164 das Fördervolumen FV des Kältemittelverdichters 10, beispielsweise durch Erfassen der erzeugten Steuersignale SSM und/oder SSE, wobei das Fördervolumen FV beispielsweise ohne zusätzliche nachfolgend beschriebene Maßnahmen der Fördervolumensteuerung 130 einem der Fördervolumensollwerte IFVS oder EFVS entspricht.

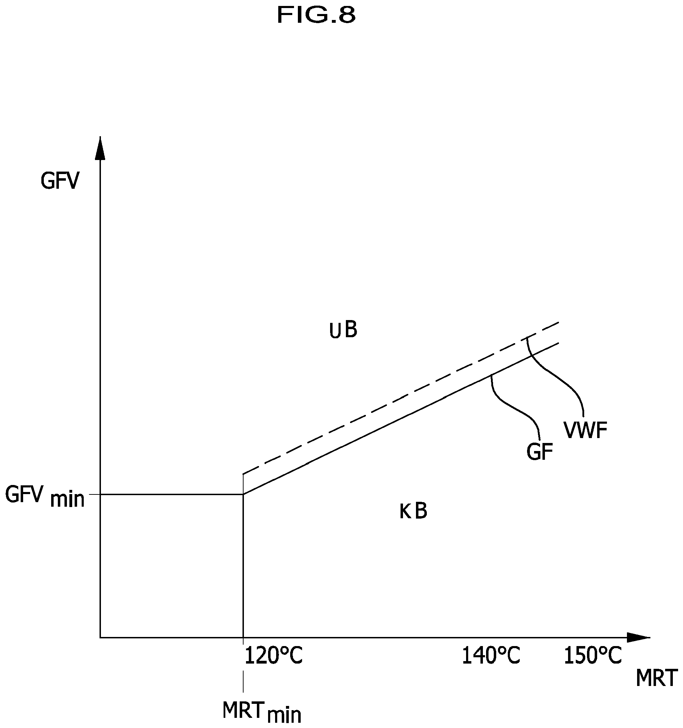

Läuft beispielsweise der Kältemittelverdichter 10 mit reduziertem Fördervolumen FV in einem Teilbereich, so erfasst die Fördervolumensteuerung 130 den Betriebszustand des Kältemittelverdichters 10 durch Bildung einer Betriebszustandswertegruppe BZW, basierend beispielsweise auf der Verdichterreferenztemperatur RT und das Fördervolumen FV, und vergleicht in einer Vergleichsstufe 166 diese Betriebszustandswertegruppe BZW mit beispielsweise in einem Speicher 154 der Fördervolumensteuerung 130 abgespeicherten Referenzwerten GF zur Erkennung von möglicherweise auftretenden kritischen Betriebszuständen KB (Fig. 8).

Insbesondere erfolgt die Bildung der momentanen Werte der Betriebszustandswertegruppe BZW dadurch, dass nicht eine bloße Erfassung der Verdichterreferenztemperatur RT oder des momentanen Fördervolumens FV erfolgt, sondern die Fördervolumensteuerung 130 ermittelt in einer der Vergleichsstufe 166 vorgelagerten Mittelwertstufe 168 einen Mittelwert MFV des Fördervolumens FV über einen definierten Erfassungszeitraum $t_1$, wobei der definierte Erfassungszeitraum $t_1$ vorzugsweise mehrere Minuten beträgt, beispielsweise innerhalb eines Bereichs von einer Minute bis 30 Minuten liegt (Fig. 7), und einen Mittelwert MRT über einen definierten Erfassungszeitraum, vorzugsweise mehrere Minuten, wobei der Erfassungszeitraum insbesondere innerhalb eines Bereichs von 30 Sekunden bis 15 Minuten liegt (Fig. 7).

Diese Betriebszustandswertegruppe BZW, umfassend die Mittelwerte MFV und MRT, wird in der Vergleichsstufe 166 von der Fördervolumensteuerung 130 mit in den Speicher 154 abgelegten Referenzwerten GF für kritische KB und unkritische UB Betriebszustände verglichen (Fig. 8).

Die Referenzwerte für unkritische UB und kritische KB Betriebszustände definiert beispielsweise ein in dem Speicher 154 abgespeicherte erste Version einer Grenzfunktion GF, die ab einer minimalen mittleren Verdichterreferenztemperatur $MRT_{min}$ relevant ist, da unterhalb der minimalen mittleren Verdichterreferenztemperatur $MRT_{min}$ ohnehin unkritische Betriebszustände vorliegen (Fig. 8).

Ferner ist die Grenzfunktion GF beispielsweise ab einem minimalen Gesamtfördervolumen $GFVF_{min}$ relevant, sofern die mittlere Verdichterreferenztemperatur MRT größer als $MRT_{min}$ ist.

Die Grenzfunktion GF wurde in diesem Fall so festgelegt, dass sie beispielsweise bei mittleren Verdichterreferenztemperaturen MRT, die größer sind als die mittlere Verdichterreferenztemperatur $MRT_{min}$, mit zunehmender mittlerer Verdichterreferenztemperatur MRT zunehmend größere mittlere Gesamtfördervolumen GFV verlangt, wobei die Grenzfunktion GF im einfachsten Fall eine Gerade mit einer vorgegebenen Steigung darstellt.

Die Grenzfunktion GF kann aber auch eine gekrümmte Kurve sein, je nachdem, welche mittleren Verdichterreferenztemperaturen MRT und welche Gesamtfördervolumen GFV in einem kritischen oder unkritischen Bereich UB liegen.

Beispielsweise liegt bei einem Kältemittelverdichter 10 die minimale mittlere Verdichterreferenztemperatur $MRT_{min}$ bei 120°, das heißt, dass bis zu der mittleren Verdichterreferenztemperatur $MRT_{min}$ der Kältemittelverdichter 10 schadfrei bei dem Gesamtfördervolumen $GFV_{min}$ und jedem höheren Gesamtfördervolumen GFV betrieben werden kann (Fig. 8).

Die Grenzfunktion GF stellt somit eine Grenze zwischen kritischen KB und unkritischen UB Betriebszuständen dar, wenn die Betriebszustandswertegruppen BZW einen auf Verdichterreferenztemperatur RT basierenden Wert MRT aufweisen, der größer ist als $MRT_{min}$, wobei die Werte des Gesamtfördervolumens GFV bei kritischen Betriebszuständen KB unterhalb oder bei unkritischen Betriebszuständen UB oberhalb der durch die Grenzfunktion GF festgelegten Werte liegen.

Sofern die Fördervolumensteuerung 130 in einer Auswertestufe 172 feststellt, dass die Betriebszustandswertegruppe BZW, einen auf der Verdichterreferenztemperatur RT basierenden Wert MRT aufweist, der über der minimalen Verdichterreferenztemperatur $MRT_{min}$ liegt, erfolgt bei einem ersten Ausführungsbeispiel in einer Sollwertstufe 174 eine Ermittlung eines internen Fördervolumensollwerts IFVS, der sich ausgehend von der Grenzfunktion GF, welche so bestimmt wurde, dass sie als Referenzwerte verschiedenen mittleren Verdichterreferenztemperaturen MRT entsprechende Werte eines Gesamtfördervolumens GFV zuordnet, aus folgender Berechnung ergibt.

**EP 3 940 231 B1**

Es wird davon ausgegangen, dass der der mittleren Verdichterreferenztemperatur MRT entsprechende Wert des Gesamtfördervolumens GFV mindestens aufrechterhalten werden soll.

Der Wert GFV soll dabei einem Gesamtfördervolumen GFV entsprechen, das durch Mittelung der Fördervolumen FV während eines Betriebsmittelungszeitraums $t_1 + t_2$ erreicht wird, der sich einerseits aus dem vergangenen Erfassungszeitraum $t_1$ ergibt, über welchen die Fördervolumen FV bei der Berechnung des mittleren Fördervolumens MFV gemittelt wurde, und andererseits aus einem zukünftigen Erfassungszeitraum $t_2$, über welchen eine Mittelung des festzulegenden zukünftigen internen Fördervolumensollwerts IFVS erfolgen soll, so dass

$$GFV \times (t_1 + t_2) = MFV \times t_1 + IFVS \times t_2 \text{ ergibt.}$$

Somit ergibt sich für den zu ermittelnden Fördervolumensollwert

$$IFVS = \frac{GFV \times (t_1 + t_2) - MFV \times t_1}{t_2}$$

Dieser interne Fördervolumensollwert IFVS wird einer Vergleichsstufe 176 in Fig. 7 übermittelt, die den internen Fördervolumensollwert IFVS mit dem externen Fördervolumensollwert EFVS vergleicht und dann, wenn der externe Fördervolumensollwert EFVS kleiner ist als der interne Fördervolumensollwert IFVS, den letzteren der Steuerstufe 162 übermittelt, und dann, wenn der interne Fördervolumensollwert IFVS kleiner ist als der externe Fördervolumensollwert EFVS, den letzteren der Steuerstufe 162 übermittelt.

Damit ist sichergestellt, dass das über den Betriebsmittelungszeitraum $t_1 + t_2$ gemittelte Gesamtfördervolumen GFV den von der Grenzfunktion GF vorgegebenen Wert für das Gesamtfördervolumen nicht unterschreitet und somit im Mittel dieser Wert bei der gemittelten Verdichterreferenztemperatur MRT nicht unterschritten wird.

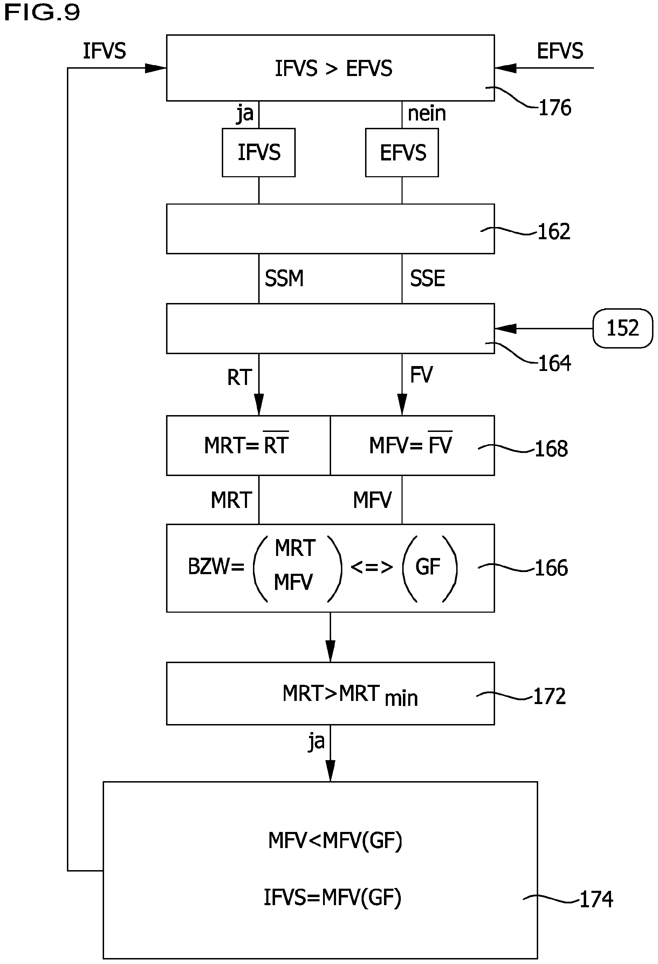

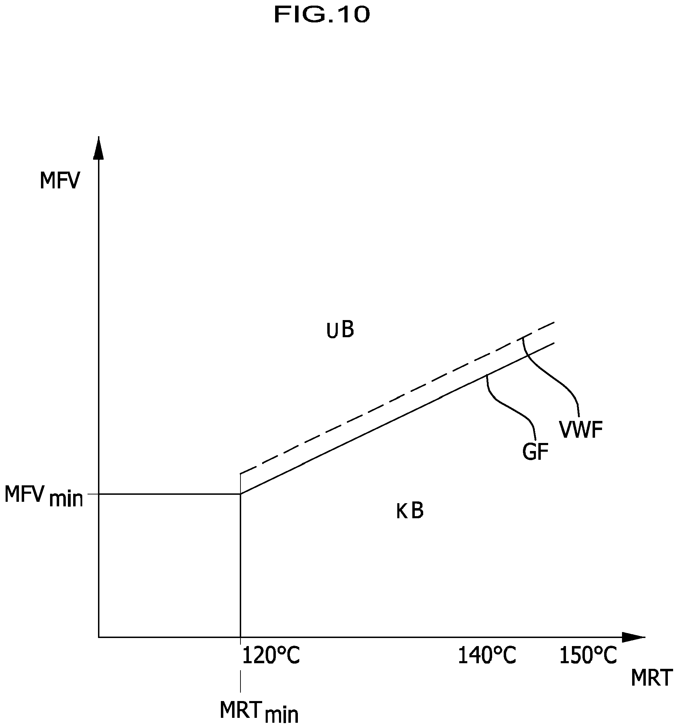

Bei einem zweiten Ausführungsbeispiel, stellt dann, wenn die Fördervolumensteuerung 130 in der Auswertestufe 172 feststellt, dass die Betriebszustandswertegruppe BZW, umfassend das mittlere Fördervolumen MFV und die mittlere Verdichterreferenztemperatur MRT, Wertepaarungen aufweist, die (gemäß Fig. 10) eine im Bereich der Grenzfunktion GF, das heißt oberhalb der mittleren Verdichterreferenztemperatur $MRT_{min}$ liegende mittlere Verdichterreferenztemperatur MRT und ein mittleres Fördervolumen MFV aufweist, das über dem entsprechenden Wert $GF_{MDT}$ der Grenzfunktion GF liegt, stellt die Fördervolumensteuerung 130 einen unkritischen Betriebszustand UB fest und es erfolgt eine Fortsetzung des Betriebs mit dem extern vorgegebenen Fördervolumensollwert EFVS (Fig. 9) und einem erneuten Durchlauf durch die Stufen 162 bis 168.

Liegen allerdings die mittlere Verdichterreferenztemperatur MRT bei der Betriebszustandswertegruppe BZW oberhalb der mittleren Verdichterreferenztemperatur $MDT_{min}$ und das mittlere Fördervolumen MFV unterhalb dem der Verdichterreferenztemperatur MRT entsprechenden Wert MFV(GF) der Grenzfunktion GF für das mittlere Fördervolumen MFV, so erkennt die Fördervolumensteuerung 130 in der Sollwertstufe 174 einen kritischen Betriebszustand KB (Fig. 10).

Die Fördervolumensteuerung 130 ermittelt dann in der Sollwertstufe 174 unter Heranziehung der Grenzfunktion GF einen internen Fördervolumensollwert IFVS, der einem mittleren Fördervolumen MFV (GF) entspricht, das durch die Grenzfunktion GF vorgegeben ist oder oberhalb derselben liegt, so dass eine Fortsetzung des Betriebs des Kältemittelverdichters 10 im unkritischen Betriebszustand UB oder entsprechend der durch die Grenzfunktion GF definierten Grenze zwischen dem unkritischen Betriebszustand UB und dem kritischen Betriebszustand KB erfolgt (Fig. 9).

Somit entspricht bei dem zweiten Ausführungsbeispiel der Betriebsmittelungszeitraum lediglich dem Zeitraum $t_1$, der für die Bestimmung der mittleren Fördervolumens MFV (GF) herangezogen wird.

Dieser interne Fördervolumensollwert IFVS wird dann der in Fig. 9 dargestellten Vergleichsstufe 176 der Fördervolumensteuerung 130 zugeführt, die den internen Fördervolumensollwert IFVS mit dem externen Fördervolumensollwert EFVS vergleicht, und den größeren Wert der beiden einer Steuerstufe 162 zur Steuerung der Fördervolumens MFV des Kältemittelverdichters 10, insbesondere zur Ansteuerung der mechanischen Steuerungseinheit 70 mittels der Steuersignale SSM und/oder der elektrischen Steuerungseinheit 140 mittels der Steuersignale SSE zuführt, so dass dadurch eine Fortsetzung des Betriebs des Kältemittelverdichters 10 erfolgen kann, ohne dass Schäden auftreten.

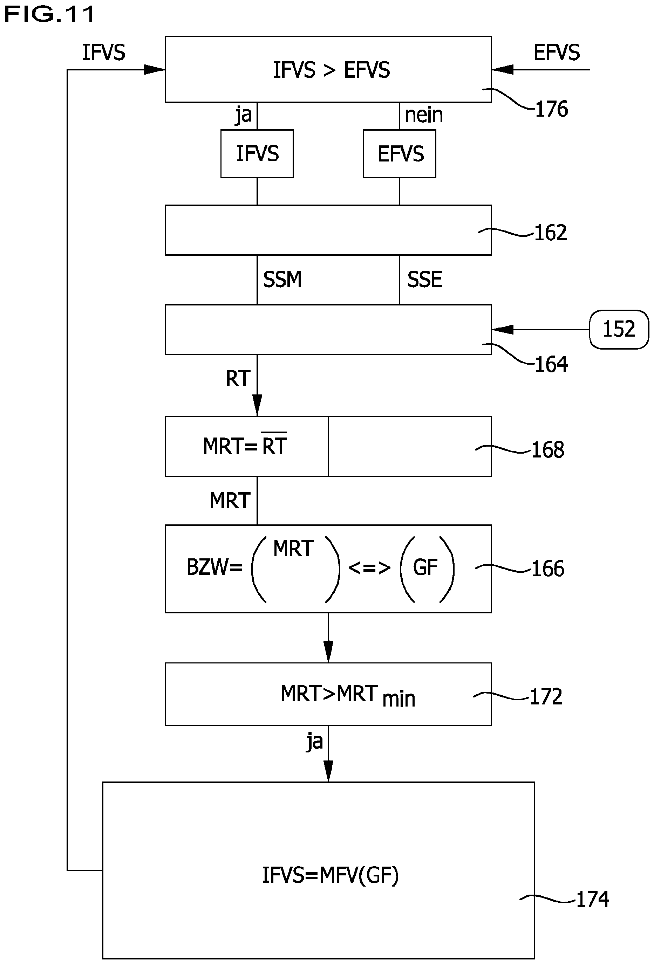

Ein drittes in Fig. 11 dargestelltes Ausführungsbeispiel, welches auf dem zweiten Ausführungsbeispiel basiert, sieht vor, dass die Fördervolumensteuerung 130 das tatsächliche Fördervolumen FV gar nicht erfasst, sondern lediglich in der Auswertestufe 172 prüft, ob die Betriebszustandswertegruppe BZW einen auf der Verdichterreferenztemperatur RT basierenden Wert MRT aufweist, der oberhalb der minimalen Verdichterreferenztemperatur $MRT_{min}$ liegt, und dann wenn dies der Fall sein sollte, ohne Vergleich des auf dem Fördervolumen FV basierenden Werts der Betriebszustandswertegruppe BZW mit dem von der Grenzfunktion GF für diese Verdichterreferenztemperatur MRT vorgegebenen Wert MFV (GF), unmittelbar als internen Fördervolumensollwert IFVS den Wert MFV (GF) heranzieht.

**10**

Bei allen Ausführungsbeispielen arbeitet Fördervolumensteuerung 130 immer dann mit dem internen Fördervolumensollwert IFVS weiter, wenn seitens der Anlagensteuerung 138 ein externer Fördervolumensollwert EFVS vorgegeben wird, der kleiner ist als der interne Fördervolumensollwert IFVS, so dass damit zwangsläufig sichergestellt ist, dass der Kältemittelverdichter 10 so lange mit einem mittleren Gesamtfördervolumen GFV (GF) oder Fördervolumen MFV (GF) betrieben wird, das bei der vorliegenden mittleren Verdichterreferenztemperatur MRT größer ist als das von der Grenzfunktion GF geforderte mittlere Gesamtfördervolumen GFV (GF) oder mittlere Fördervolumen MFV (GF) oder dieser entspricht, so dass dadurch eine Überhitzung des Kältemittelverdichters 10 ausgeschlossen werden kann (Fig. 10).

Erst wenn bei allen Ausführungsbeispielen seitens der Anlagensteuerung 138 ein externer Fördervolumensollwert EFVS vorgegeben wird, der größer als der interne Fördervolumensollwert IFVS ist, wird dieser von der Vergleichsstufe 176 der Steuerstufe 162 zugeführt und zur Steuerung der Fördervolumen FV des Kältemittelverdichters 10 herangezogen.

Ein derartiger externer Fördervolumensollwert EFVS wird dann, wenn er größer ist als der interne Fördervolumensollwert IFVS, dazu führen, dass sich die Verdichterreferenztemperatur RT und somit auch die mittlere Verdichterreferenztemperatur MRT im Laufe des Betriebs wieder reduziert, so dass auch danach wieder ein Betrieb des Kältemittelverdichters 10 mit einer Betriebszustandswertegruppe BZW möglich ist, bei welcher das mittlere Fördervolumen MFV geringere Werte aufweist.

Durch die vorgesehene Vergleichsstufe 176 und in Zusammenarbeit mit der Steuerstufe 162 wird sichergestellt, dass das Fördervolumen FV stets auf der Basis des größten der beiden Fördervolumensollwerte IFVS und EFVS gesteuert wird, so dass eine lang andauernde Überhitzung des Kältemittelverdichters 10 verhindert werden kann.

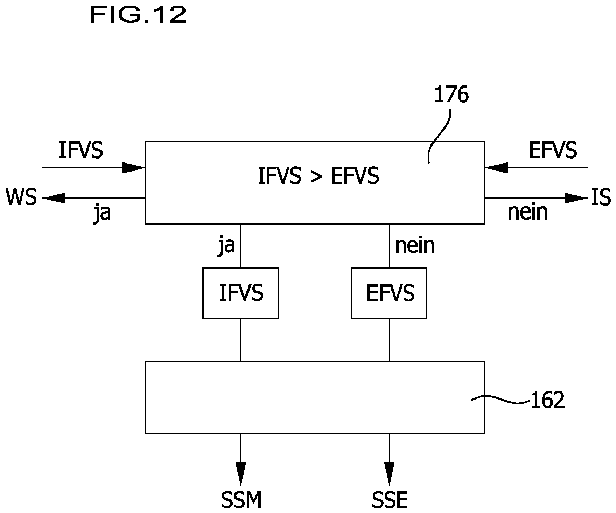

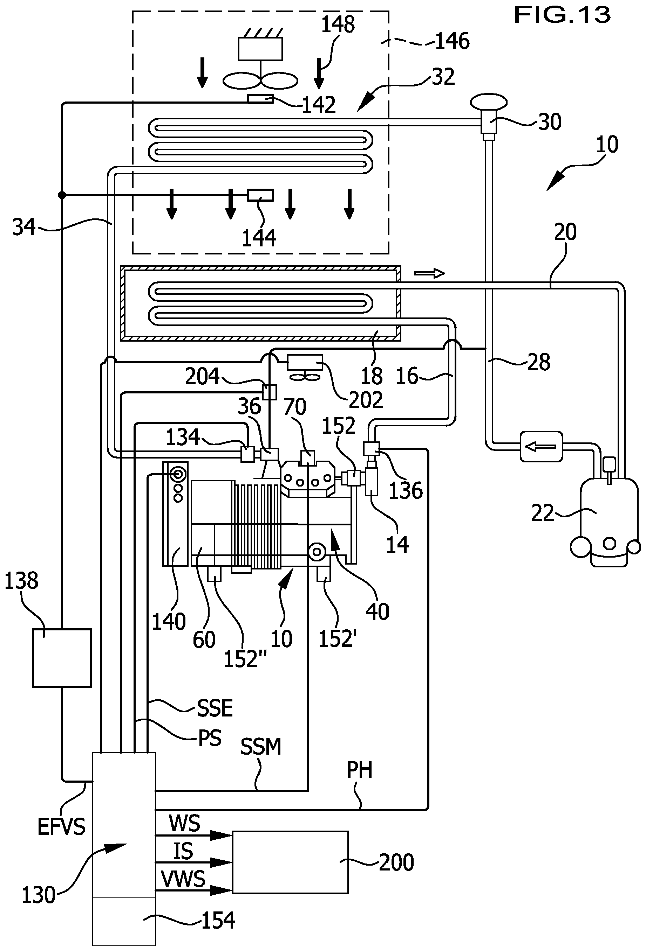

Um der Anlagensteuerung 138 oder dem Anlagenbetreiber zu vermitteln, dass der Kältemittelverdichter 10 auf der Basis des internen Fördervolumensollwerts IFVS gesteuert wird, da der externe Fördervolumensollwert EFVS niedriger ist, gibt bei einem vierten Ausführungsbeispiel, welches eine Variante der voranstehenden Ausführungsbeispiele darstellt, die Vergleichsstufe 176 im Fall, dass der interne Fördervolumensollwert IVFS größer als der externe Fördervolumensollwert EVFS ist, ein Warnsignal WS aus, welches beispielsweise optisch angezeigt wird (Fig. 12 und Fig. 13).

Außerdem gibt die Vergleichsstufe 176 ein Informationssignal IS aus, das anzeigt, dass der externe Fördervolumensollwert EFVS größer als der interne Fördervolumensollwert IFVS ist, so dass dadurch der Anlagenbetreiber oder die Anlagensteuerung 138 erkennen können, dass der Kältemittelverdichter 10 mit dem externen Fördervolumensollwert EFVS betrieben wird (Fig. 13).

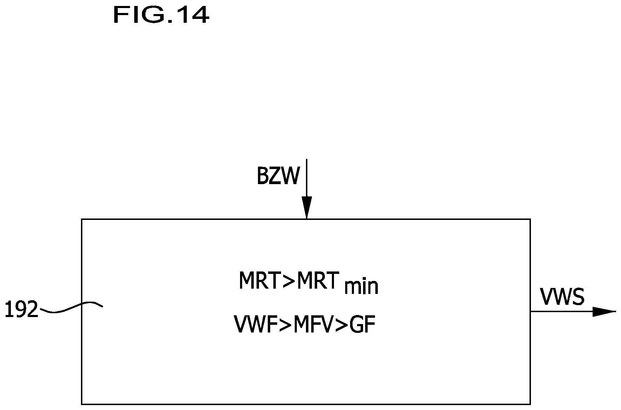

Zusätzlich ist bei einem fünften Ausführungsbeispiel eine weitere Variante der Ausführungsbeispiele der erfindungsgemäßen Fördervolumensteuerung 130 darstellt, noch vorgesehen, dass, wie in Fig. 14 dargestellt, die Betriebszustandswertegruppe BZW, generiert in der Stufe 166, einer Vergleichsstufe 192 zugeführt wird, welche die Betriebszustandswertegruppe BZW mit in dem Speicher 154 abgespeicherten Werten einer Vorwarnfunktion VWF vergleicht, welche zwar im Bereich unkritischer Betriebszustände, jedoch nahe der Grenzfunktion GF verläuft, so dass dann, bei der jeweiligen mittleren Verdichterreferenztemperatur MRT, wenn diese größer ist als die mittlere Verdichterreferenztemperatur $MRT_{min}$, mittlere Fördervolumen MFV erkannt werden, die im Bereich zwischen der Vorwarnfunktion VWF und der Grenzfunktion GF liegen.

Durch die Vergleichsstufe 192 wird in diesem Fall ein Vorwarnsignal VWS erzeugt und abgegeben, welches entweder dem Anlagennutzer oder der Anlagensteuerung 138 (Fig. 13) vermittelt, dass der Kältemittelverdichter 10 mit nennenswerter Wahrscheinlichkeit in den kritischen Bereich kommen kann.

Beispielsweise kann die Anlagensteuerung 138 dieses Vorwarnsignal VWS dazu einsetzen, von sich aus bereits die Fördervolumen FV durch Erhöhen des externen Fördervolumensollwerts EFVS zu steigern.

Insbesondere besteht somit die Möglichkeit, mit dem Warnsignal WS, dem Vorwarnsignal VWS und dem Informationssignal IS eine Anzeigeeinheit 200 (Fig. 13) zu betreiben, die entweder lediglich das Warnsignal WS, das Vorwarnsignal VWS und das Informationssignal IS durch Anzeige von verschiedenen Farben darstellt oder die Anzeigeeinheit 200 kann als Bildschirm ausgebildet sein, welche beispielsweise den dem Warnsignal WS, dem Vorwarnsignal VWS und dem Informationssignal IS zugeordnete Symbole oder Grafiken erscheinen lässt.

Ergänzend oder alternativ dazu ist dazu aber auch vorgesehen, dass die Fördervolumensteuerung 130 bereits im Fall von Teillastzuständen des Kältemittelverdichters 10 oder zumindest bei niedrigen Teillastzuständen oder durch Erfassen der Betriebszustände, beispielsweise ausgelöst durch das Vorwarnsignal VWS, einen Lüfter 202 zur Kühlung der Verdichtereinheit 40 und/oder eine Einspritzung 204 (Fig. 13) zum saugseitigen Einspritzen von flüssigem Kältemittel einsetzt, um kritische Betriebszustände KB zu vermeiden.

**Patentansprüche**

1. Kältemittelverdichter (10) für Kälteanlagen, umfassend eine durch eine Antriebseinheit (60) angetriebene Verdichtereinheit (40), wobei mindestens eine dieser Einheiten (60, 40) mit einer Steuereinheit (140, 70) versehen ist, welche durch eine Fördervolumensteuerung (130) steuerbar ist, um den Kältemittelverdichter (10) bei verschiedenen Fördervolumen (FV) zu steuern, wobei der Fördervolumensteuerung (130) ein externer Fördervolumensollwert (EFVS) übermittelt wird,

wobei die Fördervolumensteuerung (130) mittels eines Sensors (152) eine Verdichterreferenztemperatur (RT) der Verdichtereinheit (40) erfasst,

**dadurch gekennzeichnet, dass** die Fördervolumensteuerung (130) basierend auf der erfassten Verdichterreferenztemperatur (RT) und dem Fördervolumen (FV) eine Betriebszustandswertegruppe (BZW) zur Erfassung eines Betriebszustands des Kältemittelverdichters (10) ermittelt und unter Berücksichtigung von vorgegebenen Referenzwerten (GF) zur Unterscheidung von für den Kältemittelverdichter (10) unkritischen (UB) und kritischen Betriebszuständen (KB) dann, wenn der auf der Verdichterreferenztemperatur (RT) basierende Wert der ermittelten Betriebszustandswertegruppe (BZW) einen kritischen Betriebszustand des Kältemittelverdichters (10) zulässt, ein Fördervolumen (FV) vorgibt, das einen Betrieb des Kältemittelverdichters (10) außerhalb der kritischen Betriebszustände (KB) zur Folge hat.

2. Kältemittelverdichter nach Anspruch 1, **dadurch gekennzeichnet, dass** die Fördervolumensteuerung (130) beim Ermitteln der Werte der Betriebszustandswertegruppe (BZW) des Kältemittelverdichters (10) einen Mittelwert des Fördervolumens (MFV) über einen definierten Erfassungszeitraum ($t_1$) ermittelt, dass insbesondere der definierte Erfassungszeitraum in dem Bereich von einer Minute bis 30 Minuten liegt.

3. Kältemittelverdichter nach einem der voranstehenden Ansprüche, **dadurch gekennzeichnet, dass** die Fördervolumensteuerung (130) beim Ermitteln der Werte der Betriebszustandswertegruppe (BZW) einen Mittelwert der Verdichterreferenztemperatur (MRT) über einen definierten Erfassungszeitraum ermittelt, dass insbesondere der definierte Erfassungszeitraum in dem Bereich von 30 Sekunden bis 15 Minuten liegt.

4. Kältemittelverdichter nach einem der voranstehenden Ansprüche, **dadurch gekennzeichnet, dass** die Fördervolumensteuerung (130) als Verdichterreferenztemperatur (RT) mindestens eine der Temperaturen wie Druckgastemperatur auf der Hochdruckseite der Verdichtereinheit, Öltemperatur der Verdichtereinheit und Temperatur der Antriebseinheit berücksichtigt.

5. Kältemittelverdichter nach einem der voranstehenden Ansprüche, **dadurch gekennzeichnet, dass** die Fördervolumensteuerung (130) zur Ermittlung der Werte der Betriebszustandswertegruppe (BZW) das Fördervolumen (FV) basierend auf Steuersignalen (SSM, SSE) für mindestens eine der Einheiten (60, 40) erfasst.

6. Kältemittelverdichter nach einem der voranstehenden Ansprüche, **dadurch gekennzeichnet, dass** die Fördervolumensteuerung (130) bei der Bestimmung des vorzugebenden Fördervolumens (FV) den auf dem erfassten Fördervolumen (FV) basierenden Wert der Betriebszustandswertegruppe (BZW) in Relation zu den Referenzwerten (GF) berücksichtigt, dass insbesondere die Fördervolumensteuerung (130) den auf dem erfassten Fördervolumen (FV) basierenden Wert der Betriebszustandswertegruppe (BZW) mit den Referenzwerten (GF) vergleicht.

7. Kältemittelverdichter nach einem der voranstehenden Ansprüche, **dadurch gekennzeichnet, dass** die Fördervolumensteuerung (130) zu der Ermittlung des vorzugebenden Fördervolumens (FV) mindestens einen durch die Referenzwerte vorgegebenen Wert (GFV, MFV) für das Fördervolumen heranzieht der außerhalb der kritischen Betriebszustände (KB) liegt.

8. Kältemittelverdichter nach einem der voranstehenden Ansprüche, **dadurch gekennzeichnet, dass** die Fördervolumensteuerung (130) das Fördervolumen (FV) derart vorgibt, dass eine Mittelung des Fördervolumens (FV) über einen Betriebsmittelungszeitraum ($t_1 + t_2$; $t_1$) ein Gesamtfördervolumen (GFV) ergibt, das außerhalb der kritischen Betriebszustände (KB) liegt.

9. Kältemittelverdichter nach einem der voranstehenden Ansprüche, **dadurch gekennzeichnet, dass** die Referenzwerte mindestens einen Grenzwert (GF) für das Fördervolumen (FV) umfassen, welcher eine Grenze zu den kritischen Betriebszuständen (KB) definiert.

10. Kältemittelverdichter nach einem der voranstehenden Ansprüche, **dadurch gekennzeichnet, dass** der Fördervolumensteuerung (130) eine die Referenzwerte repräsentierende Grenzfunktion (GF) vorgegeben ist, welche die Grenze zwischen unkritischen (UB) und kritischen Betriebszuständen (KB) definiert.

11. Kältemittelverdichter nach einem der voranstehenden Ansprüche, **dadurch gekennzeichnet, dass** die Fördervolumensteuerung (130) das Fördervolumen (FV) so vorgibt, dass dieses mindestens dem jeweiligen Wert (MFV (GF)) der Grenzfunktion (GF) bei dem auf der Verdichterreferenztemperatur (MRT) basierenden Wert der Betriebszustandswertegruppe (BZW) entspricht.

12. Kältemittelverdichter nach einem der voranstehenden Ansprüche, **dadurch gekennzeichnet, dass** die Fördervolumensteuerung (130) das Fördervolumen (FV) so vorgibt, dass eine Mittelung des Fördervolumens (FV) über einen Betriebsmittelungszeitraum ($t_1 + t_2$; $t_1$) mindestens den jeweiligen Wert der Grenzfunktion (GF) erreicht, dass insbesondere der Betriebsmittelungszeitraum ($t_1 + t_2$; $t_1$) den Erfassungszeitraum ($t_1$) für den auf dem Fördervolumen (FV) basierenden Wert der Betriebszustandswertegruppe (BZW) umfasst und/oder dass insbesondere der Betriebsmittelungszeitraum ($t_1 + t_2$; $t_1$) größer ist als der Erfassungszeitraum ($t_1$) für den auf dem Fördervolumen (FV) basierenden Wert der Betriebszustandswertegruppe (BZW) und/oder dass insbesondere der Betriebsmittelungszeitraum ($t_1 + t_2$) auch einen zukünftigen Zeitraum ($t_2$) umfasst.

13. Kältemittelverdichter nach einem der voranstehenden Ansprüche, **dadurch gekennzeichnet, dass** die Fördervolumensteuerung (130) zur Ermittlung des Fördervolumens (FV) einen internen Fördervolumensollwert (IFVS) erzeugt und für die Bestimmung des Fördervolumens (FV) diesen berücksichtigt, dass insbesondere die Fördervolumensteuerung (130) als internen Fördervolumensollwert (IFVS) mindestens den dem auf Verdichterreferenztemperatur (RT) basierenden Wert (MRT) entsprechenden und durch die Grenzfunktion (GF) vorgegebenen Wert für das Fördervolumen (MFV) heranzieht und/oder dass insbesondere die Fördervolumensteuerung (130) den internen Fördervolumensollwert (IFVS) unter Berücksichtigung einer Mittelung über diesem internen Fördervolumensollwert (IFVS) entsprechende zukünftige Fördervolumen (FV) innerhalb des Betriebsmittelungszeitraums ($t_1 + t_2$) ermittelt und/oder dass insbesondere der interne Fördervolumensollwert (IFVS) so bestimmt wird, dass die diesem entsprechenden zukünftigen Fördervolumen (FV) in Verbindung mit dem auf den Fördervolumen (FV) basierenden Wert (MFV) der Betriebszustandswertegruppe (BZW) ein mittleres Gesamtfördervolumen (GFV) ergibt, das dem von der Grenzfunktion (GF) bei der mittleren Verdichterreferenztemperatur (MRT) vorgegebenen Grenzwert (GFV (GF)) für das Gesamtfördervolumen (GFV) entspricht, dass insbesondere die dem internen Fördervolumensollwert (IFVS) entsprechenden zukünftigen Fördervolumen (FV) über einen zukünftigen Erfassungszeitraum ($t_2$) gemittelt werden und/oder dass insbesondere der Betriebsmittelungszeitraum ($t_1 + t_2$) sich aus dem vergangenen Erfassungszeitraum ($t_1$) für den auf dem Fördervolumen (MFV) basierenden Wert der Betriebszustandswertegruppe (BZW) und dem zukünftigen Erfassungszeitraum ($t_2$) für die Mittelung der zukünftigen Fördervolumen (FV) zusammensetzt.

14. Kältemittelverdichter nach einem der voranstehenden Ansprüche, **dadurch gekennzeichnet, dass** die Fördervolumensteuerung (130) zur Vorgabe des Fördervolumens (FV) den intern ermittelten Fördervolumensollwert (IFVS) so lange berücksichtigt, so lange der extern vorgegebene Fördervolumensollwert (EFVS) unter dem intern ermittelten Fördervolumensollwert (IFVS) liegt.

15. Kältemittelverdichter nach einem der voranstehenden Ansprüche, **dadurch gekennzeichnet, dass** die Fördervolumensteuerung (130) den intern ermittelten Fördervolumensollwert (IVFS) und den extern vorgegebenen Fördervolumensollwert (EVFS) miteinander vergleicht und den größeren der Fördervolumensollwerte (IVFS, EVFS) zur Steuerung der Fördervolumen (FV) berücksichtigt.

16. Kältemittelverdichter nach einem der voranstehenden Ansprüche, **dadurch gekennzeichnet, dass** die Fördervolumensteuerung (130) dann ein Signal (WS) generiert, wenn der Kältemittelverdichter (10) mit einem intern ermittelten Fördervolumensollwert (IFVS) betrieben wird.

17. Kältemittelverdichter nach einem der voranstehenden Ansprüche, **dadurch gekennzeichnet, dass** die Fördervolumensteuerung (130) dann ein Informationssignal (IS) generiert, wenn das Fördervolumen (FV) durch den externen Fördervolumensollwert (EFVS) bestimmt wird.

18. Kältemittelverdichter nach einem der voranstehenden Ansprüche, **dadurch gekennzeichnet, dass** der Fördervolumensteuerung (130) ein Vorwarnbereich (VWB) vorgegeben ist, in welchem unkritischen Betriebszustände (UB) liegen, die an die vorgegebene Grenzfunktion (GF) angrenzen, dass insbesondere die Fördervolumensteuerung (130) ein Vorwarnsignal (VWS) generiert, wenn Betriebszustandswertegruppen (BZW) erkannt werden, die im Vorwarnbereich (VWB) liegen.

19. Kältemittelverdichter nach einem der voranstehenden Ansprüche, **dadurch gekennzeichnet, dass** die Fördervolumensteuerung (130) einen Lüfter (202) und/oder eine Kältemitteleinspritzung (204) zur Kühlung des Kältemittelverdichters (10) ansteuert.

**Claims**

1.  A refrigerant compressor (10) for refrigeration plants, comprising a compressor unit (40) driven by a drive unit (60), wherein at least one of these units (60, 40) is provided with a control unit (140, 70), which is controllable by a delivery volume controller (130), in order to control the refrigerant compressor (10) with differing delivery volumes (FV), wherein an external delivery volume desired value (EFVS) is communicated to the delivery volume controller (130),

    wherein the delivery volume controller (130) detects, by means of a sensor (152), a compressor reference temperature (RT) of the compressor unit (40),
    **characterised in that** the delivery volume controller (130), based on the detected compressor reference temperature (RT) and the delivery volume (FV), determines an operation status value group (BZW) for detecting an operation status of the refrigerant compressor (10) and, taking into account predetermined reference values (GF) for distinguishing between non-critical (UB) and critical operation statuses (KB) for the refrigerant compressor (10), when the value of the determined operation status value group (BZW) based on the compressor reference temperature (RT) permits a critical operation status of the refrigerant compressor (10), sets a delivery volume (FV), that results in an operation of the refrigerant compressor (10) outside the critical operation statuses (KB).

2.  A refrigerant compressor according to claim 1, **characterised in that** the delivery volume controller (130) when determining the values of the operation status value group (BZW) of the refrigerant compressor (10) determines an average value of the delivery volume (MFV) over a defined detection period ($t_1$) **in that** in particular the defined detection period lies in the range from 1 minute to 30 minutes.

3.  A refrigerant compressor according to one of the preceding claims, **characterised in that** the delivery volume controller (130), when determining the values of the operation status value group (BZW), determines an average value of the compressor reference temperature (MRT) over a defined detection period, **in that** in particular the defined detection period lies in the range of 30 seconds to 15 minutes.

4.  A refrigerant compressor according to one of the preceding claims, **characterised in that** the delivery volume controller (130) takes into account as compressor reference temperature (RT) at least one of the temperatures such as pressurised gas temperature on the high pressure side of the compressor unit, oil temperature of the compressor unit and temperature of the drive unit.

5.  A refrigerant compressor according to one of the preceding claims, **characterised in that** the delivery volume controller (130), for determining the values of the operation status value group (BZW), detects the delivery volume (FV) based on control signals (SSM, SSE) for at least one of the units (60, 40).

6.  A refrigerant compressor according to one of the preceding claims, **characterised in that** the delivery volume controller (130), when determining the delivery volume (FV) to be provided, takes into account the value of the operation status value group (BZW) based on the detected delivery volume (FV) in relation to the reference values (GF), **in that** in particular the delivery volume controller (130) compares the value of the operation status value group (BZW) based on the detected delivery volume (FV) with the reference values (GF).

7.  A refrigerant compressor according to one of the preceding claims, **characterised in that** the delivery volume controller (130), for determining the delivery volume (FV) to be provided, uses at least one value (GFV, MFV) for the delivery volume specified by the reference values, the value lying outside the critical operation statuses (KB).

8.  A refrigerant compressor according to one of the preceding claims, **characterised in that** the delivery volume controller (130) specifies the delivery volume (FV) such that an averaging of the delivery volume (FV) over an operation averaging period ($t_1 + t_2$; $t_1$) results in an overall delivery volume (GFV) which lies outside the critical operation statuses (KB).

9.  A refrigerant compressor according to one of the preceding claims, **characterised in that** the reference values comprise at least one boundary value (GF) for the delivery volume (FV), which defines a boundary to the critical operation statuses.

10. A refrigerant compressor according to one of the preceding claims, **characterised in that** a boundary function (GF) representing the reference values is provided to the delivery volume controller (130), the boundary function defining the boundary between uncritical (UB) and critical operation statuses (KB).

11. A refrigerant compressor according to one of the preceding claims, **characterised in that** the delivery volume controller (130) specifies the delivery volume (FV) so that it corresponds at least to the current value (MFV (GF)) of the boundary function (GF) at the value of the operation status value group (BZW) based on the compressor reference temperature (MRT).

12. A refrigerant compressor according to one of the preceding claims, **characterised in that** the delivery volume controller (130) specifies the delivery volume (FV) so that an averaging of the delivery volume (FV) over an operation averaging period $(t_1 + t_2; t_1)$ reaches at least the respective value of the boundary function (GF), **in that** in particular the operation averaging period $(t_1 + t_2; t_1)$ comprises the detection period $(t_1)$ for the value of the operation status value group (BZW) based on the delivery volume (FV) and/or **in that** in particular the operation averaging period $(t_1 + t_2; t_1)$ is larger than the detection period $(t_1)$ for the value of the operation status value group (BZW) based on the delivery volume (FV) and/or **in that** in particular the operation averaging period $(t_1 + t_2)$ also comprises a future period $(t_2)$.

13. A refrigerant compressor according to one of the preceding claims, **characterised in that** the delivery volume controller (130) for averaging the delivery volume (FV) generates an internal delivery volume desired value (IFVS) and for the determination of the delivery volume (FV) takes this into account, **in that** in particular the delivery volume controller (130) uses as internal delivery volume desired value (IFVS) at least the value for the delivery volume (MFV) corresponding to the value (MRT) based on the compressor reference temperature (RT) and specified by the boundary function (GF) and/or **in that** in particular the delivery volume controller (130) determines the internal delivery volume desired value (IFVS) taking into account an averaging over future delivery volumes (FV) corresponding to this internal delivery volume desired value (IFVS) and within the operation averaging period $(t_1 + t_2)$ and/or **in that** in particular the internal delivery volume desired value (IFVS) is so determined that the future delivery volumes (FV) corresponding to this in connection with the value (MFV) of the operation status value group (BZW) based on the delivery volumes (FV) produce an average overall delivery volume (GFV), which corresponds to the boundary value (GFV (GF)) for the overall delivery volume (GFV) specified by the boundary function (GF) at the average compressor reference temperature (MRT), **in that** in particular the future delivery volumes (FV) corresponding to the internal delivery volume desired value (IFVS) are averaged over a future detection period $(t_2)$ and/or **in that** in particular the operation averaging period $(t_1 + t_2)$ is composed of the past detection period $(t_1)$ for the value of the operation status value group (BZW) based on the delivery volume (MFV) and the future detection period $(t_2)$ for the average of the future delivery volumes (FV).

14. A refrigerant compressor according to one of the preceding claims, **characterised in that**, for specifying the delivery volume (FV), the delivery volume controller (130) takes into account the internal averaged delivery volume desired value (IFVS) as long as the externally specified delivery volume desired value (EFVS) lies below the internally determined delivery volume desired value (IFVS).

15. A refrigerant compressor according to one of the preceding claims, **characterised in that** the delivery volume controller (130) compares with each other the internally determined delivery volume desired value (IVFS) and the externally specified delivery volume desired value (EVFS) and takes into account the larger of the delivery volume desired values (IVSF, EVFS) for controlling the delivery volumes (FV).

16. A refrigerant compressor according to one of the preceding claims, **characterised in that** the delivery volume controller (130) generates a signal (WS) when the refrigerant compressor (10) is operated with an internally determined delivery volume desired value (IFVS).

17. A refrigerant compressor according to one of the preceding claims, **characterised in that** the delivery volume controller (130) generates an information signal (IS) when the delivery volume (FV) is determined by the external delivery volume desired value (EFVS).

18. A refrigerant compressor according to one of the preceding claims, **characterised in that** there is provided to the delivery volume controller (130) an advance warning range (VWB) in which lie non-critical operation statuses (UB), which border the specified boundary function (GF), **in that** in particular the delivery volume controller (130) generates an advance warning signal (VWS) when there are recognised operation status value groups (BZW) which lie in the advance warning range (VWB).

**19.** A refrigerant compressor according to one of the preceding claims, **characterised in that** the delivery volume controller (130) controls a fan (202) and/or a refrigerant injection means (204) for cooling the refrigerant compressor (10).

**Revendications**

**1.** Compresseur de fluide réfrigérant (10) pour des installations frigorifiques, comprenant une unité de compresseur (40) entraînée par une unité d'entraînement (60), dans lequel au moins l'une de ces unités (60, 40) est dotée d'une unité de commande (140, 70), laquelle peut être commandée par une commande de volume acheminé (130) pour commander le compresseur de fluide réfrigérant (10) pour différents volumes acheminés (FV), dans lequel une valeur de consigne de volume acheminé externe (EFVS) est transmise à la commande de volume acheminé (130), dans lequel la commande de volume acheminé (130) saisit une température de référence de compresseur (RT) de l'unité de compresseur (40) au moyen d'un capteur (152), **caractérisé en ce que** la commande de volume acheminé (130) établit un groupe de valeurs d'état de fonctionnement (BZW) pour la saisie d'un état de fonctionnement du compresseur de fluide réfrigérant (10) en se basant sur la température de référence de compresseur (RT) saisie et le volume acheminé (FV) et, prenant en compte des valeurs de référence (GF) prédéfinies pour la différenciation entre des états de fonctionnement non critiques (UB) et critiques (KB) pour le compresseur de fluide réfrigérant (10), prédéfinit un volume acheminé (FV) dès lors que la valeur basée sur la température de référence de compresseur (RT) du groupe de valeurs d'état de fonctionnement (BZW) établi autorise un état de fonctionnement critique du compresseur de fluide réfrigérant (10), lequel volume acheminé a pour conséquence un fonctionnement du compresseur de fluide réfrigérant (10) en dehors des états de fonctionnement critiques (KB).

**2.** Compresseur de fluide réfrigérant selon la revendication 1, **caractérisé en ce que** lors de l'établissement des valeurs du groupe de valeurs d'état de fonctionnement (BZW) du compresseur de fluide réfrigérant (10) la commande de volume acheminé (130) établit une valeur moyenne du volume acheminé (MFV) pendant une période de saisie ($t_1$) définie, **en ce qu'**en particulier la période de saisie définie se situe dans la plage allant d'une minute à 30 minutes.

**3.** Compresseur de fluide réfrigérant selon l'une des revendications précédentes, **caractérisé en ce que** lors de l'établissement des valeurs du groupe de valeurs d'état de fonctionnement (BZW) la commande de volume acheminé (130) établit une valeur moyenne de la température de référence de compresseur (MRT) pendant une période de saisie définie, **en ce qu'**en particulier la période de saisie définie se situe dans la plage allant de 30 secondes à 15 minutes.

**4.** Compresseur de fluide réfrigérant selon l'une des revendications précédentes, **caractérisé en ce que** la commande de volume acheminé (130) prend en compte en tant que température de référence de compresseur (RT) au moins l'une parmi des températures telles qu'une température de gaz comprimé sur le côté haute pression de l'unité de compresseur, une température d'huile de l'unité de compresseur et une température de l'unité d'entraînement.

**5.** Compresseur de fluide réfrigérant selon l'une des revendications précédentes, **caractérisé en ce que** pour l'établissement des valeurs du groupe de valeurs d'état de fonctionnement (BZW) la commande de volume acheminé (130) saisit le volume acheminé (FV) en se basant sur des signaux de commande (SSM, SSE) pour au moins l'une des unités (60, 40).

**6.** Compresseur de fluide réfrigérant selon l'une des revendications précédentes, **caractérisé en ce que** lors de la détermination du volume acheminé (FV) à prédéfinir la commande de volume acheminé (130) prend en compte la valeur, du groupe de valeurs d'état de fonctionnement (BZW), se basant sur le volume acheminé (FV) saisi en relation avec les valeurs de référence (GF), **en ce qu'**en particulier la commande de volume acheminé (130) compare la valeur, du groupe de valeurs d'état de fonctionnement (BZW), se basant sur le volume acheminé (FV) saisi avec les valeurs de référence (GF).

**7.** Compresseur de fluide réfrigérant selon l'une des revendications précédentes, **caractérisé en ce que** pour l'établissement du volume acheminé (FV) à prédéfinir la commande de volume acheminé (130) fait appel à au moins une valeur (GFV, MFV) prédéfinie par les valeurs de référence pour le volume acheminé qui se situe en dehors des états de fonctionnement critiques (KB).

**8.** Compresseur de fluide réfrigérant selon l'une des revendications précédentes, **caractérisé en ce que** la commande de volume acheminé (130) prédéfinit le volume acheminé (FV) de sorte qu'une moyenne du volume acheminé (FV) pendant une période de moyenne de fonctionnement ($t_1 + t_2$ ; $t_1$) donne un volume acheminé global (GFV) qui se situe en dehors des états de fonctionnement critiques (KB).

9. Compresseur de fluide réfrigérant selon l'une des revendications précédentes, **caractérisé en ce que** les valeurs de référence comprennent au moins une valeur limite (GF) pour le volume acheminé (FV), laquelle définit une limite pour les états de fonctionnement critiques (KB).

10. Compresseur de fluide réfrigérant selon l'une des revendications précédentes, **caractérisé en ce qu'**une fonction limite (GF) représentant les valeurs de référence est donnée au préalable à la commande de volume acheminé (130), laquelle définit la limite entre des états de fonctionnement non critiques (UB) et critiques (KB).

11. Compresseur de fluide réfrigérant selon l'une des revendications précédentes, **caractérisé en ce que** la commande de volume acheminé (130) prédéfinit le volume acheminé (FV) de sorte que celui-ci corresponde au moins à la valeur (MFV(GF)) respective de la fonction limite (GF) pour la valeur, du groupe de valeurs d'état de fonctionnement (BZW), se basant sur la température de référence de compresseur (MRT).

12. Compresseur de fluide réfrigérant selon l'une des revendications précédentes, **caractérisé en ce que** la commande de volume acheminé (130) prédéfinit le volume acheminé (FV) de sorte qu'une moyenne du volume acheminé (FV) pendant une période de moyenne de fonctionnement ($t_1 + t_2$ ; $t_1$) atteigne au moins la valeur respective de la fonction limite (GF), **en ce qu'**en particulier la période de moyenne de fonctionnement ($t_1 + t_2$ ; $t_1$) comprend la période de saisie ($t_1$) pour la valeur, du groupe de valeurs d'état de fonctionnement (BZW), se basant sur le volume acheminé (FV), et/ou **en ce qu'**en particulier la période de moyenne de fonctionnement ($t_1 + t_2$ ; $t_1$) est plus grande que la période de saisie ($t_1$) pour la valeur, du groupe de valeurs d'état de fonctionnement (BZW), se basant sur le volume acheminé (FV) et/ou **en ce qu'**en particulier la période de moyenne de fonctionnement ($t_1 + t_2$) comprend également une période ($t_2$) future.

13. Compresseur de fluide réfrigérant selon l'une des revendications précédentes, **caractérisé en ce que** pour l'établissement du volume acheminé (FV) la commande de volume acheminé (130) produit une valeur de consigne de volume acheminé interne (IFVS) et pour la détermination du volume acheminé (FV) prend en compte celle-ci, **en ce qu'**en particulier la commande de volume acheminé (130) fait appel, en tant que valeur de consigne de volume acheminé interne (IFVS), au moins à la valeur, pour le volume acheminé (MFV), correspondant à la valeur (MRT) se basant sur la température de référence de compresseur (RT) et prédéfinie par la fonction limite (GF) et/ou **en ce qu'**en particulier la commande de volume acheminé (130) établit la valeur de consigne de volume acheminé interne (IFVS) en prenant en compte des volumes acheminés (FV) futurs correspondant à une moyenne de cette valeur de consigne de volume acheminé interne (IFVS) à l'intérieur de la période de moyenne de fonctionnement ($t_1 + t_2$) et/ou **en ce qu'**en particulier la valeur de consigne de volume acheminé interne (IFVS) est déterminée de sorte que les volumes acheminés (FV) futurs correspondant à celle-ci en lien avec la valeur (MFV), du groupe de valeurs d'état de fonctionnement (BZW), se basant sur le volume acheminé (FV) donne un volume acheminé global (GFV) moyen qui correspond à la valeur limite (GFV(GF)), pour le volume acheminé global (GFV), prédéfinie par la fonction limite (GF) pour la température de référence de compresseur (MRT), **en ce qu'**en particulier les volumes acheminés (FV) futurs correspondant à la valeur de consigne de volume acheminé interne (IFVS) sont moyennés pendant une période de saisie ($t_2$) future et/ou **en ce qu'**en particulier la période de moyenne de fonctionnement ($t_1 + t_2$) se compose de la période de saisie ($t_1$) passée pour la valeur, du groupe de valeurs d'état de fonctionnement (BZW), se basant sur le volume acheminé (MFV) et de la période de saisie ($t_2$) future pour la moyenne des volumes acheminés (FV) futurs.

14. Compresseur de fluide réfrigérant selon l'une des revendications précédentes, **caractérisé en ce que** la commande de volume acheminé (130) prend en compte la valeur de consigne de volume acheminé établie en interne (IFVS) pour la prédéfinition du volume acheminé (FV) aussi longtemps que la valeur de consigne de volume acheminé prédéfinie en externe (EFVS) se situe sous la valeur de consigne de volume acheminé établie en interne (IFVS).

15. Compresseur de fluide réfrigérant selon l'une des revendications précédentes, **caractérisé en ce que** la commande de volume acheminé (130) compare l'une avec l'autre la valeur de consigne de volume acheminé établie en interne (IFVS) et la valeur de consigne de volume acheminé prédéfinie en externe (EFVS) et prend en compte la plus grande des valeurs de consigne de volume acheminé (IFVS, EFVS) pour la commande des volumes acheminés (FV).

16. Compresseur de fluide réfrigérant selon l'une des revendications précédentes, **caractérisé en ce que** la commande de volume acheminé (130) produit un signal (WS) à partir du moment où le compresseur de fluide réfrigérant (10) est exploité avec une valeur de consigne de volume acheminé établie en interne (IFVS).

17. Compresseur de fluide réfrigérant selon l'une des revendications précédentes, **caractérisé en ce que** la commande de volume acheminé (130) produit un signal d'information (IS) à partir du moment où le volume acheminé (FV) est déterminé par la valeur de consigne de volume acheminé externe (EFVS).

18. Compresseur de fluide réfrigérant selon l'une des revendications précédentes, **caractérisé en ce qu'**une zone d'avertissement (VWB) est donnée au préalable à la commande de volume acheminé (130), dans laquelle zone d'avertissement se situent des états de fonctionnement non critiques (UB) qui sont limitrophes de la fonction limite (GF) prédéfinie, **en ce qu'**en particulier la commande de volume acheminé (130) produit un signal d'avertissement (VWS) lorsque sont reconnus des groupes de valeurs d'état de fonctionnement (BZW) qui se situent dans la zone d'avertissement (VWB).

19. Compresseur de fluide réfrigérant selon l'une des revendications précédentes, **caractérisé en ce que** la commande de volume acheminé (130) pilote un ventilateur (202) et/ou une injection de fluide réfrigérant (204) pour le refroidissement du compresseur de fluide réfrigérant (10).

FIG.1

FIG.2

FIG.3

FIG.4

FIG.5

FIG.6

## FIG.7

IFVS $\longrightarrow$ | IFVS > EFVS | $\longleftarrow$ EFVS

176

ja | nein

| IFVS | | EFVS |

162

SSM | SSE

152 $\longrightarrow$

164

RT | FV

| MRT= $\overline{\text{RT}}$ | MFV= $\overline{\text{FV}}$ |

168

MRT | MFV

$$BZW = \begin{pmatrix} MRT \\ MFV \end{pmatrix} <=> \begin{pmatrix} GF \end{pmatrix}$$

166

| MRT>MRT$_{min}$ |

172

ja

$$IFVS = \frac{GFV(t_1+t_2)-MFV\, t_1}{t_2}$$

174

## FIG.8

GFV

UB

VWF

GF

GFV min

KB

120°C     140°C    150°C

MRT

MRTmin

FIG.9

IFVS → ⟶ [ IFVS > EFVS ]  ← EFVS ~176

ja          nein

[ IFVS ]      [ EFVS ]

[            ] ~162

SSM          SSE

[            ] ← ( 152 )  ~164

RT           FV

[ MRT=$\overline{RT}$  |  MFV=$\overline{FV}$ ] ~168

MRT          MFV

$$BZW = \begin{pmatrix} MRT \\ MFV \end{pmatrix} <=> \begin{pmatrix} GF \end{pmatrix}$$ ~166

[ $MRT > MRT_{min}$ ] ~172

ja

MFV < MFV(GF)

IFVS = MFV(GF)   ~174

FIG.10

## FIG.11

FIG.12

FIG.13

EP 3 940 231 B1

FIG.14

BZW

192

$$MRT > MRT_{min}$$

$$VWF > MFV > GF$$

VWS

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160298627 A1